(19) Europäisches Patentamt
European Patent Office
Office européen des brevets

(11) EP 0 654 051 B1

(12) EUROPÄISCHE PATENTSCHRIFT

(45) Veröffentlichungstag und Bekanntmachung des Hinweises auf die Patenterteilung:
**17.06.1998 Patentblatt 1998/25**

(51) Int Cl.[6]: **C08G 18/08**, C08G 18/28, C08G 18/42, C08G 18/80, C09D 175/06

(21) Anmeldenummer: **94906760.7**

(22) Anmeldetag: **09.08.1993**

(86) Internationale Anmeldenummer:
**PCT/EP93/02133**

(87) Internationale Veröffentlichungsnummer:
**WO 94/03511 (17.02.1994 Gazette 1994/05)**

# (54) WASSERVERDÜNNBARES ÜBERZUGSMITTEL AUF POLYOL- UND POLYISOCYANATBASIS, VERFAHREN ZU DESSEN HERSTELLUNG UND SEINE VERWENDUNG

WATER-DILUTABLE COATING BASED ON POLYOLS AND POLYISOCYANATES, PROCESS FOR PREPARING THE SAME AND ITS USE

AGENT D'ENDUCTION DILUABLE DANS L'EAU A BASE DE POLYOLS ET DE POLYISOCYANATES, SON PROCEDE DE PREPARATION ET SON UTILISATION

(84) Benannte Vertragsstaaten:
**AT BE CH DE DK ES FR GB GR IT LI NL PT SE**

(30) Priorität: **08.08.1992 DE 4226243**

(43) Veröffentlichungstag der Anmeldung:
**24.05.1995 Patentblatt 1995/21**

(73) Patentinhaber: **Herberts Gesellschaft mit beschränkter Haftung**
**42285 Wuppertal (DE)**

(72) Erfinder:
- **PATZSCHKE, Hans-Peter**
  **D-42279 Wuppertal (DE)**
- **SCHWAN, Heinrich**
  **D-42287 Wuppertal (DE)**
- **GOL, Franjo**
  **D-51373 Leverkusen (DE)**

(74) Vertreter: **Türk, Gille, Hrabal, Leifert**
**Brucknerstrasse 20**
**40593 Düsseldorf (DE)**

(56) Entgegenhaltungen:
**EP-A- 0 469 389**　**US-A- 4 116 902**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein wäßriges Überzugsmittel, insbesondere ein wäßriges Zweikomponenten-(2K)-Überzugsmittel, ein Verfahren für seine Herstellung und seine Verwendung in Ein- und Mehrschicht-Lackierungen.

In den letzten Jahren stieg die Bedeutung wäßriger Lacke und Beschichtungen auf Grund immer steigender Emissionsrichtlinien im Hinblick auf die bei der Lackapplikation freiwerdenden Lösemittel stark an. Obwohl inzwischen bereits für viele Anwendungsgebiete wäßrige Lacksysteme zur Verfügung stehen, erreichen diese nicht das hohe Qualitätsniveau konventioneller, lösemittelhaltiger 2-K-Lacke bei Trocknung in niedrigen Temperaturbereichen.

Die Herstellung wäßriger Polyurethan-Dispersionen und ihre Anwendung für die Lackherstellung in Einkomponenten-Systemen sind bekannt.

Die Verwendung von Wasser als flüssige Phase in 2-K-Polyurethanlacken mit freien Isocyanatgruppen ist normalerweise nicht ohne weiteres möglich, weil die Isocyanatgruppen nicht nur mit den reaktiven Gruppen der wasserverdünnbaren Basisharze, sondern auch mit Wasser unter Bildung von Kohlendioxid und Harnstoffgruppen reagieren. Dadurch werden in der Regel die Verarbeitungszeit und die Qualität der Überzüge auf nicht praxisgerechte Werte reduziert.

Nach der DE-OS 26 24 442 sollen wasserverdünnbare OH-gruppenhaltige Polyurethanharze, die gegebenenfalls mit Fettsäuren modifiziert sind, mit Isocyanatgruppen enthaltenden Härtern unter Herstellung von 2-K-Systemen kombiniert werden können. Beispiele bzw. eine genaue Beschreibung wie dies erfolgen soll, sind jedoch nicht angegeben.

Die DE-PS 27 08 442 beschreibt den Zusatz monomerer organischer Diisocyanate zur Verbesserung des Eigenschaftsbildes wäßriger Polyurethan-Dispersionen.

In der EP-A-O 469 389 werden in Wasser dispergierbare, OH-gruppenhaltige Polyurethane, gegebenenfalls in Gegenwart von niedrigmolekularen Polyalkoholen, mit in Wasser dispergierbaren, freie Isocyanatgruppen enthaltenden mehrfunktionellen Verbindungen gemischt, wobei beide Komponenten beträchtliche Mengen an hydrophilen Zentren eingebaut enthalten, die eine Selbstemulgierbarkeit bewirken. Hierbei kann es sich um anionische Gruppen und um Ethylenoxid-Einheiten handeln, die als terminale und/oder laterale Polyetherketten eingebaut werden. Diese Systeme weisen eine sehr kurze Topfzeit und unzureichende optische Eigenschaften (Bildung von Trübungen) auf.

In der EP-A-0 496 205 wird beschrieben, daß in eine neutralisierte wasserverdünnbare OH-gruppenhaltige Polyolkomponente, die mindestens aus einem Urethan-, Carboxylat- und Hydroxylgruppen enthaltendem Polyester oder Alkydharz besteht, eine flüssige Polyisocyanatkomponente einemulgiert wird. Die Patentschrift gibt keine Lehre, wie mit lösemittelarmen Lacken bei dickeren Schichten eine Blasenbildung im Film vermieden werden kann.

In der DE-OS 40 36 927 wird die Herstellung von Polyethylenoxidgruppen enthaltenden Polyisocyanatzubereitungen beschrieben, die in einfacher Weise ohne Sedimentbildung zu wäßrigen Dispersionen verarbeitet werden, um daraus Verbundfolien-Verklebungen herzustellen. In der DE-OS 41 13 160 werden carboxylgruppenhaltige Polyisocyanatgemische beschrieben, in denen die Carboxylgruppen neben freien Isocyanatgruppen lagerstabil vorliegen und sich ohne Schwierigkeiten gegebenenfalls nach teilweiser Neutralisation in Wasser lösen oder dispergieren lassen. Detaillierte Angaben über den Aufbau der OH-gruppenhaltigen wasserverdünnbaren Harzkomponente werden nicht gemacht.

Bei Anwendung der vorstehend beschriebenen wasserverdünnbaren 2-K-Systeme für den Lacksektor werden besonders Spritzen dicker Schichten und Trocknen bei Raumtemperatur verschiedene Schwierigkeiten beobachtet, wie beispielsweise ein zu kurzes Potlife des Lackgemisches, eine zu starke Blasenbildung mit steigender Schichtdicke und eine zu geringe Wasser- und Benzinfestigkeit von daraus erstellten Beschichtungen.

Aufgabe der vorliegenden Erfindung ist es, ein wäßriges Überzugsmittel zur Verfügung zu stellen, das nur geringe Anteile an organischen Lösemitteln enthält, ein verbessertes Potlife hat, bei niedrigen Temperaturen vernetzt und auch, insbesondere beim Spritzauftrag, bei großen Schichtdicken zu blasenfreien Überzügen führt, die hohe Anforderungen an Glanz, mechanische Stabilität, sowie Schwitzwasserbeständigkeit erfüllen.

Überraschenderweise wurde gefunden, daß das Ziel mit einem speziellen Aufbau des Bindemittelsystems erreicht werden kann.

Gegenstand der Erfindung sind daher wasserverdünnbare Überzugsmittel, enthaltend

A) 40 bis 95 Gew.-%, bevorzugt 50 bis 90 Gew.-%, eines filmbildenden, gegebenenfalls zumindest teilweise neutralisierten Polyurethanharzes oder eines Gemisches derartiger Harze, in der Form einer wäßrigen Dispersion, wobei das Polyurethanharz oder das Gemisch hergestellt wurde durch

I) Herstellung eines NCO-Gruppen enthaltenden Preaddukts aus

a) einer oder mehreren organischen Säuren mit einer sterisch gehinderten Säurefunktion und zwei mit Isocyanat reaktionsfähigen Gruppen,
und/oder

einer oder mehreren Verbindungen mit mindestens einer in der Hauptkette liegenden oder seitenständigen, hydrophilen Kette mit Ethylenoxideinheiten und zwei mit Isocyanat reaktionsfähigen Gruppen, mit
b) einem oder mehreren aliphatischen, cycloaliphatischen arylaliphatischen oder aromatischen Diisocyanaten, gegebenenfalls zusammen mit einem oder mehreren aliphatischen, cycloaliphatischen arylaliphatischen oder aromatischen Diisocyanaten mit mindestens einer seitenständigen hydrophilen Kette mit Ethylenoxid-einheiten,

II) Herstellung eines OH-Gruppen enthaltenden Prekondensats aus

c) einem oder mehreren Polyalkoholen,
d) gegebenenfalls einer oder mehreren Fettsäuren,
e) einer oder mehreren Dicarbonsäuren, und
f) gegebenenfalls einem oder mehreren Polyolen mit mindestens einer seitenständigen hydrophilen Kette mit Ethylenoxideinheiten,
g) gegebenenfalls höherfunktionellen Polycarbonsäuren und/oder Monoalkoholen, und

III) anschließende Umsetzung der unter I) und II) erhaltenen Produkts, gegebenenfalls in Anwesenheit eines oder mehrerer Monoisocyanate mit einer hydrophilen Kette mit Ethylenoxideinheiten, in derartigen Mengenanteilen, daß die OH-Gruppen des unter II) erhaltenen Prekondensats im Überschuß über die vorhandenen NCO-Gruppen vorliegen.

B) 60 bis 5 Gew.-%, bevorzugt 50 bis 10 Gew.-%, eines oder mehrerer Polyisocyanate mit mehr als einer freien Isocyanatgruppe, die bei Raumtemperatur, gegebenenfalls unter Zusatz eines oder mehrerer organischer Lösemittel, flüssig sind, wobei sich die Gewichtsprozent von A) und B) jeweils auf den Harz-Festkörpergehalt beziehen und auf 100 Gew.-% addieren, sowie

C) gegebenenfalls ein oder mehrere zusätzliche Bindemittel, übliche Pigmente, Füllstoffe und/oder lackübliche Additive und Hilfsstoffe.

Gemäß einer bevorzugten Ausführungsform der Erfindung hat das Polyurethanharz oder das Polyurethanharzgemisch der Komponente A)

im Durchschnitt eine OH-Zahl von 25 bis 250,
einen Gehalt an Urethangruppen von 2 bis 20 Gew.-%, bezogen auf den Harzfestkörper,
ein Zahlenmittel der Molmasse (Mn) von 1000 bis 100000,
und, jeweils bezogen auf 100 g Harzfestkörper einen Gehalt an Säurefunktion von weniger als 80 mEqu und/oder einen Gehalt an Ethylenoxideinheiten von weniger als 150 mEqu, wobei, falls Säurefunktion und Ethylenoxideinheiten gemeinsam vorhanden sind, die Summe der Säurefunktionen und der Ethylenoxideinheiten 1 bis 200 mEqu beträgt, aufweist, wobei die Säurefunktionen gegebenenfalls zumindest teilweise neutralisiert sind.

Gemäß einer weiteren bevorzugten Ausführungsform ist Komponente A) ein Gemisch aus einem oder mehreren Polyurethanharzen mit Säurefunktionen und einem oder mehreren Polyurethanharzen mit mindestens einem seitenständige, Ethylenoxideinheiten enthaltende Kette aufweisenden Emulgator, der zwei mit Isocyanat reaktive Gruppen aufweist.

Erfindungsgemäß können als Komponente a) beispielsweise eine oder mehrere organische Säuren mit einer sterisch gehinderten Säurefunktion und zwei mit Isocyanatgruppen reaktionsfähigen Gruppen, ausgewählt aus Hydroxylgruppen, primären und sekundären Aminogruppen, eingesetzt werden. Ein weiteres Beispiel ist ein Polyurethanprepolymer, das mindestens eine, seitenständige, Ethylenoxideinheiten enthaltende Kette und zwei endständige Hydroxylgruppen aufweist.

Als Komponente A sind urethangruppenhaltige Polymere geeignet, die durch Reaktion von Polyolen II) mit Polyisocyanaten I) entstehen, wobei die Mengenverhältnisse so ausgewählt werden, daß das Äquivalentverhältnis von OH-Gruppen zu NCO-Gruppen größer als 1 ist. Die Polyole der Komponente I sind Polyesterpolyole, die Polyether,-Polycarbonat-, Polyesteramid-, Polyamido- und/oder Polyacryleinheiten aufweisen können.

Die Hydroxylzahl der Komponente A liegt bei 25 bis 250, vorzugsweise über 40 und unter 140. Im statistischen Mittel enthält jede Polymerkette vorzugsweise mindestens 2, bevorzugt mindestens 3, insbesondere 4 bis 6 isocyanatreaktive Gruppen, das heißt Gruppen mit aktivem Wasserstoff wie beispielsweise bevorzugt OH-Gruppen. Der Gehalt an Urethangruppen der Komponente A beträgt bevorzugt 2 bis 20 Gew.-% und liegt besonders bevorzugt über 5 und unter 15 Gew.-%. Das Polyurethanharz A besitzt im allgemeinen eine mittlere Molmasse (Mn) von 1000 bis

100000, vorzugsweise über 1500, besonders bevorzugt über 2000 und vorzugsweise unter 50000, bevorzugt unter 10000, besonders bevorzugt unter 6000.

Werden bei der Herstellung der Polyesterpolyolkomponente II größere Mengen an niedermolekularen, höherfunktionellen Polyalkoholen eingesetzt, kann ein Defunktionalisieren mit reaktiven monofunktionellen Verbindungen notwendig werden. Hierzu werden Monocarbonsäuren, nämlich gesättigte und/oder ungesättigte Fettsäuren (Komponente d) verwendet. Der Gehalt an gegebenenfalls eingeesterten Fettsäuren liegt bevorzugt unter 50 Gew.-%, besonders unter 40 Gew.-%, sowie bevorzugt über 10 Gew.-% bezogen auf das Gewicht der fertigen Komponente A). Solche erfindungsgemäße OH-gruppenhaltige Urethanalkyde werden bevorzugt als Komponente A eingesetzt.

Als hydrophile Bestandteile enthalten die Polyurethanharze der Komponente A Säurefunktionen, die neutralisiert sein können und/oder Ethylenoxideinheiten, beispielsweise in der Form von diese enthaltenden Seitenketten.

Der Einbau der hydrophilen Gruppen, insbesondere von sauren bzw. anionischen Gruppen in die Komponente A) erfolgt stufenweise, das heißt in einer ersten Reaktionsstufe I) werden als Komponente a1 z.B. Amino- oder Hydroxysäuren, z.B. Amino- oder Hydroxycarbonsäuren, mit sterisch behinderter Säurefunktion mit (cyclo)-aliphatischen Diisocyanaten als Komponente b) so umgesetzt, daß die sterisch behinderte Säuregruppe, z.B. Carboxylgruppe, nicht reagiert und eine stabile NCO- und Säure- (z.B. COOH) Gruppen enthaltende Verbindung entsteht. Bevorzugt werden Hydroxycarbonsäuren eingesetzt. Danach wirdin einer zweiten Reaktionsstufe II) mit Hilfe von nieder- oder höhermolekularen Polyalkoholen als Komponente c), gegebenenfalls unter Zusatz von Kettenstoppern wie Fettsäuren als Monocarbonsäuren (Komponente d) ein sequenziert aufgebautes Molekül mit hydrophilen und hydrophoben Segmenten synthetisiert. In ähnlicher Arbeitsweise werden als Komponente a) in der Reaktionsstufe I bevorzugt bifunktionelle Aufbaukomponenten mit seitenständigen, hydrophilen Ketten aus Ethylenoxid-Einheiten als nicht-ionische Reste eingeführt. Eine andere bevorzugte Arbeitsweise ist die Emulgierung des OH-Polyurethanharzes mit Hilfe eines nichtionischen Emulgators. Bevorzugt eingesetzt werden Emulgatoren, die bei der Vernetzung mit der Komponente B) über eine oder mehrere funktionelle Gruppen in den Film einreagieren.

Als hydrophiler Bestandteil der Komponente A) werden weniger als 80, bevorzugt weniger als 70 mEqu Säurefunktionen (z.B. COOH), speziell weniger als 60 mEqu, besonders bevorzugt weniger als 50 mEqu, und bevorzugt mehr als 1 mEqu, besonders bevorzugt mehr als 5 mEqu pro 100 g Festharz verwendet. Der Gehalt an Ethylenoxid-Einheiten beträgt bevorzugt mehr als 1 mEqu, speziell mehr als 5 mEqu, besonders bevorzugt mehr als 20 mEqu, wobei die obere Grenze unter 150 mEqu, bevorzugt unter 100 mEqu und besonders bevorzugt unter 75 mEqu Ethylenoxid-Einheiten pro 100 g Festharz liegt.

Nach einer bevorzugten Ausführungsform liegen die Untergrenze an Säurefunktionen, sowohl wie die Untergrenze der Ethylenoxid-Einheiten, jeweils bei 1 mEqu, so daß sich für die Summe ein Bereich von 2 bis 200 mEqu ergibt, jeweils bezogen auf 100 g Festharz.

Das hydroxylgruppenhaltige, wasserverdünnbare Polyurethanharz kann auch aus einem Gemisch oder Präkondensat von zwei verschiedenen Komponenten bestehen, von denen die saure Komponente A1) Carboxyl- und Hydroxylgruppen, die Komponente A2) nur Hydroxylgruppen enthält, wobei solche Mengenverhältnisse ausgewählt werden, daß die Mischung von Carboxy- und Hydroxy-Äquivalenten der Komponente A) entspricht. Die Polyethylenetherketten können sowohl in die Komponente A1) als auch in die Komponente A2) eingebaut werden. Besonders bevorzugt werden als Komponente A1) ein niedermolekulares, carboxylgruppenhaltiges Urethanalkyd und als Komponente A2) ein hochmolekulares, hydroxylgruppenhaltiges, nicht modifiziertes lineares Polyurethanharz eingesetzt.

Beispielsweise werden 90 bis 40 Gew.-T der Komponente A1) mit 20 bis 190 mÄquiv. COOH/100 g mit 10 bis 60 Gew.-% der Komponente A2) in einem solchen Verhältnis gemischt, daß die Summe der Mengen A1) und A2) gleich 100 ist und die mÄquiv. der Säurefunktion des Gemisches gleich oder unter den geforderten Grenzwerten für die Einzelkomponente A) liegen. Dabei gilt

$$\text{mÄquiv. } A_1 = \frac{100 \times \text{mÄquiv. } A}{\text{Menge } A_1}$$

Bevorzugte Mengen bestehen aus 50 Gew.-% Komponente A1) zu 50 Gew.-% $A_2$). Besonders bevorzugt wird das Verhältnis 40 : 60, speziell 30 : 70. Die Komponenten A1) und A2) können auch präkondensiert werden. Dabei wird unter Präkondensation wird das Erwärmen der Komponenten $A_1$) und $A_2$) im Gemisch auf solche Temperaturen verstanden, daß ein definierter Viskositätsanstieg zu beobachten ist.

Ein anderes bevorzugtes hydroxylgruppenhaltiges Gemisch besteht aus einer carboxylgruppenhaltigen Komponente A3) und einer polyoxyethylenoxidgruppenhaltigen Komponente A4). Beispielsweise werden 95 bis 60 Gew.-% der Komponente A3) mit 5 bis 40 Gew.-% der Komponente A4) in einem solchen Verhältnis gemischt, daß in A3) der Gehalt an Säurefunktionen weniger als 800 mEqu und in A4) ein Gehalt an Ethylenoxideinheiten von weniger als 150 mEqu und die Summe beider Funktionen und Komponenten 1 bis 200 mEquiv. beträgt, wobei sich die Äquivalente stets auf die Gesamtmenge von A3) und A4) beziehen.

Eine bevorzugte Ausführungsform der flüssigen gegebenenfalls lösemittelhaltigen Komponente B) besitzt eine Viskosität bei 23°C von über 0,5 und unter 2000 mPa.s, besonders bevorzugt über 1 und unter 200 mPa.s. Die Funktionalität beträgt beispielsweise 1,5 bis 5 reaktive Isocyanatgruppen pro Molekül, besonders bevorzugt im statistischen Durchschnitt mindestens 2 und höchstens 4. Die Polyisocyanate können mit ionischen oder nicht-ionischen hydrophilen Gruppen substituiert sein. Bevorzugt werden nicht modifizierte Polyisocyanate. Die Menge an Polyisocyanatkomponente B) wird dabei so bemessen, daß bevorzugt ein NCO/OH-Äquivalentverhältnis, bezogen auf die Isocyanatgruppen der Komponente B und die alkoholischen Hydroxylgruppen der Komponente A, von 0,5 : 1 bis 5 : 1, vorzugsweise über 1 : 1 und unter 3 : 1 resultiert.

Die Herstellung der gebrauchsfertigen Beschichtungsmittel erfolgt kurz vor der Verarbeitung durch einfaches Verrühren der beiden Komponenten A) und B) bei Raumtemperatur. Dabei kann die Polyisocyanatkomponente B in eine neutralisierte, konzentrierte oder verdünnte wäßrige Polymerdispersion zugegeben werden. Das gelöste bzw. dispergierte Polymerisat übernimmt dabei die Funktion eines Emulgators. Durch Zusatz von weiterem Wasser kann die geeignete Verarbeitungsviskositätstellt werden.

Unter "wäßrigen Dispersionen" werden hier heterogene Systeme verstanden, bei denen die organische Harzphase als Tröpfchen oder Teilchen beispielsweise mit einer mittleren Größe von 1 bis 3000 nm, bei monomodalen Verteilungen bevorzugt über 50 und unter 200 nm, bei bimodalen Verteilungen bevorzugt Komonente 1 über 50 und unter 150 nm und Komponente 2 über 200 und unter 500 nm in Wasser verteilt ist. Säurezahl bzw. Neutralisationsgrad werden gegebenenfalls in Kombination mit der Zahl der Polyethylenoxideinheiten so abgestimmt, daß die gewünschten Teilchengrößen beim Dispergieren des Harzes unter optischen Dispergierbedingungen entstehen. Für den zunehmenden Einsatz wäßriger Polyurethandispersionen spricht hauptsächlich, daß man auf die Verwendung organischer Lösemittel weitgehend verzichten kann.

Es hat sich gezeigt, daß die erfindungsgemäßen Überzugsmittel bei einer niedrigen Vernetzungstemperatur verarbeitbar sind, die bei 10 bis 120°C, bevorzugt unter 120°C, besonders bevorzugt über 20°C und unter 80°C liegt.

Die erfindungsgemäßen Überzugsmittel weisen nach dem Vermischen der Komponenten A und B eine verbesserte Topfzeit von mehreren Stunden auf, können in mehreren Spritzgängen bei Ablüftzeiten von z.B. ca. 5 min. einwandfrei verspritzt werden und härten zu hochwertigen, blasenfrei vernetzten Filmen auch bei Trockenfilmschichtdicken über 70 µm, bevorzugt über 100 µm aus, die bezüglich ihres Eigenschaftsniveaus den bislang aus lösemittelhaltigen 2K-Polyurethanlacken erhaltenen Lackfilmen vergleichbar und damit bekannten wäßrigen Systemen überlegen sind.

Die Herstellung der OH-gruppenhaltigen Polyurethanharze oder Urethanalkyde (Komponente A) erfolgt beispielsweise durch Umsetzung der Polyalkohole II) mit den Polyisocyanaten I) in der Schmelze oder in wasserfreien organischen Lösemitteln, die nicht mit Isocyanatgruppen reaktiv sind, beispielsweise bei Temperaturen von 60 bis 160°C, gegebenenfalls unter Zusatz von üblichen basischen und/oder metallischen Katalysatoren. Die gewünschte Hydroxylzahl wird durch Auswahl der Mengenverhältnisse von OH zu NCO-Äquivalenten eingestellt. Die Hydroxylzahl der Polyesteralkohole II) kann durch eine geeignete Mischung von niedermolekularen Polyalkoholen mit zwei und/oder mehr OH-Gruppen erhalten werden, gegebenenfalls unter Zusatz von höhermolekularen Dialkoholen wie Polyesterdiolen, Polyetherdiolen, Polycarbonatdiolen als Komponente c) und/oder gegebenenfalls Zusatz von kettenabrechenden Monocarbonsäuren als Komponente d) bei der Herstellung der Polyesteralkoholkomponente II. Als Komponente c) sind beispielsweise geeignet:

Niedermolekulare Polyalkohole mit mehr als zwei OH-Gruppen können linear oder verzweigt sein und haben ein Molekulargewicht von 92 bis 350.

Höherfunktionelle Polyole, wie Glycerin, Trimethylolethan, Trimethylolpropan, Trimethylolhexan, Di-trimethylolpropan, 2,2-Dimethylol-butanol-(3), 2,2-(Bis-hydroxymethyl)-butanol-(1), Pentaerythrit, Di-pentaerythrit, Tripentaerythrit, Tris-(2-hydroxyethyl)-isocyanurat, sowie ethoxylierte oder propoxylierte Trimethylolpropan und Pentaerythrit-Produkte oder Zuckeralkohole wie Mannit oder Sorbit und deren Mischungen.

Zur Herstellung des Polyurethanharzes kann ein hoher Anteil eines oder mehrerer höhermolekularer, überwiegend linearen Polyole mit einer bevorzugten Hydroxylzahl von 30 bis 150 zugesetzt werden. Es handelt sich bevorzugt um Polyether und/oder Polyesterdiole mit einem Zahlenmittel der Molmasse (Mn) von 400 bis 5000.

Beispiele für hochmolekulare Polyole sind aliphatische Polyetherdiole der allgemeinen Formel

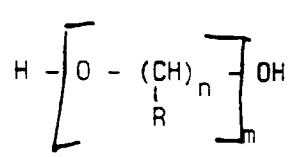

in der R = Wasserstoff oder ein niedriger, gegebenenfalls mit verschiedenen Substituenten versehener Alkylrest ist,

wobei n = 3 bis 6, bevorzugt 3 bis 4 und m = 2 bis 100, bevorzugt 5 bis 50 ist. Beispiele sind lineare oder verzweigte Polyetherdiole wie Poly(oxypropylen)glykole und/oder Poly(oxybutylen)glykole. Die ausgewählten Polyetherdiole sollen keine übermäßigen Mengen an niedermolekularen Ethergruppen einbringen, weil sonst die gebildeten Polymere in Wasser anquellen. Die bevorzugten Polyetherdiole sind Poly(oxypropylen)glykole im Molmassenbereich Mn von 500 bis 3000, bevorzugt über 800 und unter 2000, sowie Polyoxybutylenglykole.

Die Herstellung von höhermolekularen Polyesterpolyolen kann durch Polykondensation nach bekannten Verfahren erfolgen, wie sie bepsielsweise in S. Paul, Surface Coatings, S 70 bis 139, John Wiley & Sons, New York, 1985 beschrieben sind. Die Polykondensation kann durch Erwärmen in der Schmelze oder im Azeotropverfahren bei Temperaturen von z.B. 160 bis 260°C unter Wasserabspaltung durchgeführt werden. Die gewünschte Zahl von Hydroxyl- und Säuregruppen kann durch geeignete Wahl der Äquivalenzverhältnisse, eine geeignete Reaktionsführung und gegebenenfalls ein stufenweises Arbeiten eingeführt werden. Die geeigneten Verfahrensbedingungen und Auswahlkriterien sind dem Fachmann geläufig.

Für die Polyurethan-Dispersion (PU-Dispersion), Komponente A) erfolgt bevorzugt die Herstellung von Polyesterpolyolen aus Dicarbonsäure und Dialkoholen, die gegebenenfalls geringfügig durch kleine Mengen an Trialkoholen modifiziert sein können. Die Reaktion wird, gegebenenfalls unter Zusatz von metallischen Katalysatoren, wie Zinnoctoat oder Dibutylzinnoxid, solange durchgeführt, bis praktisch alle Carboxylgruppen (Säurezahl unter 1) umgesetzt sind. Die OH-Zahl beträgt bevorzugt 35 bis 200, besonders bevorzugt über 50 und unter 150; das Zahlenmittel der Molmasse liegt bevorzugt bei 500 bis 5000, Desonoers bevorzuat über 600 und unter 3000; sie werden durch den verwendeten Alkoholüberschuß festgelegt. Zur Bestimmung der theoretischen Molmasse genügt bei linearem Aufbau die Bestimmung der OH-Zahl unter Berücksichtigung einer Funktionalität von 2. Die zahlenmittlere Molmasse wird dann errechnet nach der Formel

$$Mn = \frac{56100}{\text{OH-Zahl}} \times 2$$

Geeignete Dicarbonsäuren (Komponente e) enthalten zwei Carboxylgruppen an einem Kohlenwasserstoffgerüst mit beispielsweise 4 bis 36 C-Atomen. Einsetzbar sind auch die veresterungsfähigen Derivate der Dicarbonsäuren, wie Anhydride oder Methylester. Die bevorzugt eingesetzten Dicarbonsäuren sind linear oder verzweigt aliphatisch, alicyclisch oder aromatisch aufgebaut. Die beiden Carboxylgruppen sind bevorzugt so angeordnet, daß sie kein intramolekulares Anhydrid bilden können, das heißt die beiden Carboxylgruppen sind beispielsweise durch eine Kohlenstoffkette mit 3 bis 14 C-Atomen, bevorzugt 4 bis 8 C-Atomen, voneinander getrennt.

Geeignete Beispiele für Dicarbonsäuren und deren Derivate sind Phthalsäureanhydrid, Isophthalsäure, mit niederen Alkylgruppen substituierte Isophthalsäure oder Terephthalsäure, Terephthalsäuredimethylester, 1,4- oder 1,3-Di- oder Tetrahydrophthalsäure, Bernsteinsäureanhydrid, Alkylbernsteinsäureanhydrid, Methyltetrahydrophthalsäureanhydrid, Fumarsäure, Maleinsäureanhydrid, Adipinsäure, 2,2,4-Trimethyladipinsäure, Acelainsäure, Sebacinsäure, dimerisierte Fettsäuren, Cyclopentandicarbonsäure, Isomere der Cyclohexandicarbonsäuren, Norbornendicarbonsäure, Endoethylencyclohexandicarbonsäure oder halogenierte Dicarbonsäure wie Chlorphthalsäureanhydrid und Hexachlorendomethylentetrahydrophthalsäureanhydrid oder deren Mischungen. Höherfunktionelle Polycarbonsäuren und deren Derivate wie Trimellithsäureanhydrid, Pyromellithsäureanhydrid oder Bisanhydride, können anteilweise eingebaut werden, um bevorzugt einen verzweigten Polyester oder solche mit erhöhter Säurezahl zu erhalten. Eine geeignete Tricarbonsäure kann auch durch substituierende Addition oder Diels-Alder-Reaktion von Maleinsäureanhydrid oder (Meth)acrylsäure an eine ungesättigte Fettsäure erhalten werden.

Primäre, kettenabbrechend wirkende Monoalkohole wie Isodekanol, Cyclohexanol, Benzylalkohol oder Fettalkohole können anteilig, bevorzugt bei Verwendung von mehr als zweibasischen Carbonsäuren, mit einkondensiert werden.

Eine weitere bevorzugte Gruppe von Polyalkoholen der Komponente c) sind Dialkanole, die linear oder verzweigt aliphatisch oder cyclisch aufgebaut sind und ein Molekulargewicht von 60 bis zu etwa 350 haben. Ihre beiden OH-Gruppen werden ebenfalls z.B. durch eine Kohlenstoffkette mit 2 bis 14, bevorzugt 4 bis 8 C-Atomen voneinander getrennt. An ihrer linearen oder substituierten Kohlenstoffkette, die gegebenenfalls durch Ether- oder Estergruppen unterbrochen ist, sitzen primäre, sekundäre oder tertiäre Alkoholgruppen. Für besonders hydrolysebeständige Polyester werden Diole mit sterisch gehinderten primären OH-Gruppen oder mit sekundären Hydroxylgruppen verwendet. Beispiele für Dialkanole sind Butandiol-1,4, Pentandiol-1,6, Hexandiol-1,6, Hexandiol-2,5, 2-Ethylhexandiol-1,3, Decandiol-1,2, 2,2,4-Trimethylpentandiol-1,3, 2,2-Dimethyl-1,3-propandiol, 2-Ethyl-2-butyl-1,3-propandiol, 2,2-Bis-(hydroxymethyl)-1-butanol, Cyclohexandiol-1,4, Cyclohexandimethanol, 1,3-Di-(hydroxyethal)-5,5-dimethylhydantoin, sowie die hydrierten Bisphenole A oder F. Als Etheralkohole werden beispielsweise Diethylenglykole, Triethylenglykole, Dipropylenglykole oder Tripropylenglykole, sowie ethoxylierte oder propoxylierte Bispnenol A- oder F-Produkte verwendet. Ein einsetzbarer Esteralkohol ist Hydroxypivalinsäure-neopentylglykolester.

Es wird ein linearer aliphatischer Aufbau der Polyesterpolyole der Komponente II) bevorzugt, der gegebenenfalls

anteilweise eine aromatische Dicarbonsäure enthalten kann und am Molekülende bevorzugt eine OH-Gruppe enthält. Die Polyesterpolyole weisen im wesentlichen keine freien Carboxylgruppen auf und sind bevorzugt frei von olefinischen Doppelbindungen.

Als komponente c) können auch Urethandiole eingesetzt werden, die ourcn Umsetzung von Alkylencarbonaten, wie Ethylen- oder Propylencarbonat, mit primären Aminoalkoholen, wie Aminoethanol oder Aminoisopropanol oder mit primären Diaminen, wie Ethylendiamin, Propylendiamin, 2-Methyl-pentandiamin-1,5 oder Hexandiamin-1,6 entstehen.

Als Polyesterpolyole der Komponente c) können erfindungsgemäß auch Polyesterdiole eingesetzt werden, die durch Kondensation von Hydroxycarbonsäuren erhalten werden. Sie zeichnen sich durch die wiederkehrenden Polyesteranteile der Formel

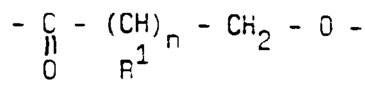

aus, wobei n = 3 bis 18, bevorzugt 4 bis 6 und der Substituent $R^1$ Wasserstoff, ein Alkyl-, Cycloalkyl- und/oder Alkoxyrest ist. Kein Substituent enthält mehr als 12 Kohlenstoffatome. Die Grundbausteine sind beispielsweise Hydroxycapronsäure, Hydroxybuttersäure, Hydroxydecansäure und/oder Hydroxystearinsäure. Als Ausgangsmaterial kann auch ein Lacton der folgenden allgemeinen Formel verwendet werden

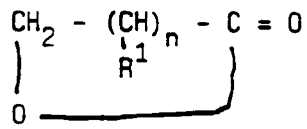

in der n und $R^1$ die vorstehend angegebene Bedeutung haben. Für die Herstellung von Polyesterdiolen sind substituierte epsilon-Caprolactone mit n = 4 und $R^1$ = H bevorzugt, die mit niedermolekularen Polyolen gestartet werden. Unter carboxygruppenfreien Polyesterdiolen werden auch OH-funktionelle Kohlensäureester verstanden, die beispielsweise durch Umsetzung von Kohlensäure-diethyl- und/oder -diphenylester mit Glykolen oder Dialkanolen, wie 1,6-Hexandiol hergestellt werden können. Die Polycarbonate können durch seitenständige Gruppen hoher Polarisierbarkeit oder durch Einbau aromatischer oder cyclischer Monomerer beliebig modifiziert sein. Es können auch sequenzierte Polydiole aus Polyethern und Polyestern, bzw. normalen Carbonsäure- und Kohlensäureestern verwendet werden.

Für die Herstellung der Preaddukte der Komponente I) geeignete Diisocyanaten sind beispielsweise nicht-funktionalisierte Diisocyanate besser geeignet, wie hydrophilisierte Diisocyanate, obwohl letztere mitverwendet werden können. Für die Urethanisierung werden beispielsweise lineare oder verzweigte Kohlenwasserstoffe mit einem Isocyanatgehalt von 20 bis 50 Gew.-% verwendet. Sie enthalten im statistischen Durchschnitt als funktionelle Gruppen mindestens zwei Isocyanatgruppen, die im Molekül asymmetrisch oder symmetrisch angeordnet sind. Sie können aliphatisch, alicyclisch, arylaliphatisch oder aromatisch sein. Ihr Aufbau kann beispielsweise nach dem gewünschten Anwendungszweck des zu pigmentierenden Überzugsmittels gewählt werden. Beispielsweise kann man für den späteren Einsatz in Grundierungen oder Primern bevorzugt die Isomere oder Isomerengemische von aromatischen Diisocyanaten verwenden. Für Decklacksysteme werden beispielsweise aufgrund ihrer guten Beständigkeit gegenüber ultraviolettem Licht bevorzugt Diisocyanate eingesetz, bei denen die Isocyanatgruppe an ein nicht-aromatisches, gegebenenfalls substituiertes C-Atom gebunden ist.

Beispiele für typische Diisocyanate, die für die Herstellung der Urethanharze geeignet sind, entsprechen den allgemeinen Formen I, II und III. Geeignete Polyisocyanate haben die allgemeine Formel

$$O = C = N - R - N = C = O \qquad I$$

in welcher R für einen aromatischen, gegebenenfalls mit einer oder mehreren Alkylgruppen substituierten oder Methylenbrücken aufweisenden Kohlenwasserstoffrest mit insgesamt 6 bis 15 Kohlenstoffatomen, einen verzweigten oder

linearen aliphatischen Kohlenwasserstoffrest mit 2 bis 18, vorzugsweise 6 bis 10 Kohlenstoffatomen, einen oder mehreren aromatischen Ringen, einem acyclischen Kohlenwasserstoffrest mit 6 bis 15 Kohlenstoffatomen oder einen heterocyclischen Ring steht.

Es können alle Isomeren oder Isomerengemische von organischen Diisacyanaten eingesetzt werden. Als aromatiscne Diisocyanate eignen sich z.B. die Isomeren von Phenylendiisocyanat, Toluylendiisocyanat, Xylylendiisocyanat, Bisphenylendiisocyanat oder Naphtylendiisocyanat. Bevorzugt eingesetzt werden aliphatisch-aromatische Diisocyanate der Formel:

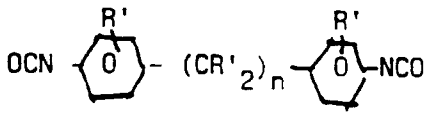

II

wobei R' gleich oder verschieden sein kann und Wasserstoff oder ein Alkylrest mit 1 bis 8 C-Atomen, vorzugsweise 1 oder 2 C-Atomen, speziell $-CH_3$ ist und n eine ganze Zahl von 1 bis 10, bevorzugt 1 bis 3 bedeutet. Typische Beispiele für diese Art von Diisocyanaten sind Diphenylmethan-2,4' und/oder -4,4'-diisocyanat, 3,2'-Diisocyanat-4-methyldiphenylmethan oder Diphenylpropandiisocyanat.

Eine andere Gruppe von bevorzugt eingesetzten Diisocyanaten sind solche, deren NCO-Gruppe direkt an einen linearen oder verzweigten Rest gebunden ist. Solche Diisocyanate sind Verbindungen der Formel:

$$O = C = N - (CR'_2)_r - N = C = O \qquad III$$

wobei r ganzzahlig von 2 bis 20, insbesondere 6 bis 8 ist und R' die gleiche Bedeutung wie in Formel II hat. Hierunter fallen beispielsweise Propylendiisocyanat, Ethylethylendiisocyanat, Dimethylethylendiiscyanat, Methyltrimethylendiisocyanat, Trimethylhexandiisocyanat, Pentamethylendiisocyanat-1,5, 2-Methyl-pentandiisocyanat-1,5, Hexamethylendiisocyanat-1,6, Dodecandiisocyanat-1,12 oder Octadecandiisocyanat-1,18.

Die Isocyanatgruppen können auch an einen cycloaliphatischen Rest gebunden sein, wie beispielsweise Cyclopentan-diisocyanat, 1,4-Bis-(isocyanat)cyclohexan oder Bis-(4-isocyanatcyclohexyl)-methan. Aromatische oder cycloaliphatische Kohlenwasserstoffe können auch über $-CR'_2$-Gruppen, wobei R' die gleiche Bedeutung wie vorher hat, mit Isocyanatgruppen verknüpft sein. Beispiele hierfür sind 1,3-Bis-(2-isocyantmethyl)-cyclohexan, Isophorondiisocyanat oder Tetra-methylen-xylylendiisocyanat.

Bei der Herstellung der Preaddukte I) wird mit einem OH/NCO-Äquivalentverhältnis kleiner 1, bevorzugt unter 0,99 und über 0,7 gearbeitet. Besonders bevorzugt wird ein Mol der Verbindung, die gegenüber NCO-Gruppen aktive Wasserstoffgruppen enthält, im Verhältnis unter ein Mol H-aktiver Komponente pro Äquivalent NCO verwendet.

Polyurethane sind im allgemeinen nicht mit Wasser verträglich, wenn nicht bei ihrer Synthese spezielle Bestandteile eingebaut und/oder besondere Herstellungsschritte vorgenommen werden, wie der Einbau hydrophiler Bestandteile.

Zum Einbau saurer oder anionischer Gruppen dienen Verbindungen der Komponente a), die zwei mit Isocyanatgruppen reagierende H-aktive Gruppen und mindestens eine saure, anionische oder zur Anionenbildung befähigte Gruppe enthalten. Geeignete mit Isocyanatgruppen reagierende H-aktive Gruppen sind insbesondere Hydroxylgruppen, sowie primäre und/oder sekundäre Aminogruppen. Beispiele für Gruppen, die zur Anionenbildung befähigt sind, sind Carboxyl-, Sulfonsäure und/oder Phosphonsäuregruppen. Bevorzugt werden Carbonsäure- oder Carboxylatgruppen verwendet. Sie sollen so reaktionsträge sein, daß die Isocyanatgruppen des Diisocyanats vorzugsweise mit den Hydroxylgruppen des Moleküls reagieren. Das wird durch sterische Hinderung der Säurefunktionen bewirkt.

Bevorzugt werden Alkansäuren mit zwei mit Isocyanatgruppen reagierenden H-aktiven Gruppen verwendet, deren Carboxylgruppe sterisch so behindert ist, daß sie nicht mit Isocyanatgruppen zur Reaktion kommt. Beispiele hierfür sind Alkansäuren mit H-aktiven Gruppen, die am alpha-ständigen Kohlenstoffatom zur Carboxylgruppe einen sperrigen Substituenten oder zwei Substituenten aufweisen. Sperrige Substituenten können beispielsweise tert.-Alkylgruppen sein, wie die tert.-Butylgruppe. Andere Substituenten sind beispielsweise zwei Methylgruppen, zwei Ethylgruppen usw. Die H-aktiven Gruppen können beliebig über die Grundstruktur der Alkansäuren und/oder die Substituenten verteilt sein. Bevorzugt werden dazu Alkansäuren mit zwei Substituenten am alpha-ständigen Kohlenstoffatom eingeestzt. Der Substituent kann eine Hydroxylgruppe, eine Alkylgruppe oder bevorzugt eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Beispiele für solche Verbindungen sind Dihydroxypropionsäure, Dihydroxybernsteinsäure, Dihydroxybenzoesäure Dihydroxy-Cyclohexanmonocarbonsäure und/oder Hydroxypivolinsäure. Eine besonders bevorzugte Gruppe von Dihydroxyalkansäuren sind die 2,2-Dialkylolalkansäuren, die durch die Strukturformel

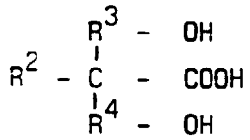

IV

gekennzeichnet sind worin $R^2$ = Wasserstoff oder eine Alkylgruppe mit bis zu 20 Kohlenstoffatomen bedeutet; $R^3$ und $R^4$ unabhängig voneinander jeweils lineare oder verzweigte $C_1$-$C_6$-Alkylenketten, bevorzugt $-CH_2-$ sind. Beispiele für solche Verbindungen sind 2,2-Dimethylolessigsäure, 2,2-Dimethylolpropionsäure, 2,2-Dimethylolbuttersäure und 2,2-Dimethylolpentansäure, 2,2-Dimethyl-3,3-dimethylol-buttersäure, 2-tert-Butyl-2-methylol-3-methylol-buttersäure. Die bevorzugte Dihydroxyalkansäure ist 2,2-Dimethylolpropionsäure oder 2,2-Dimethylol-buttersäure. Es wird soviel Dihydroxyalkansäure in das Gemisch als Diol gegeben, daß die Säurezahl des fertiggestellten Polyesterurethanharzes den gewünschten Milliäquivalenten pro 100 g Festharz entspricht.

Neben den Dihydroxyalkancarbonsäuren können noch Monohydroxycarbonsäuren als Kettenabbruchsmittel mitverwendet werden.

Verwendbare Phosphorsäuregruppen enthaltende Verbindungen sind z.B. 2,2-Dimethylolpropan-Phosphonsäure oder Diethanolamid-methanphosphonsäure.

Aminogruppenhaltige Verbindungen sind beispielsweise 5-Diaminovaleriansäure, 3,4-Diaminobenzoesäure, 2,4-Diaminotoluolsulfonsäure und 2,4-Diamino-diphenylethersulfonsäure.

Um stabile wasserverdünnbare Polyurethan-Dispersionen mit sehr niedriger Säurezahl zu erhalten, ist es oft günstig nicht-ionische, wasserlösliche Gruppen wie beispielsweise eine Polyethylenoxid enthaltende Gruppe in die Harze einzuführen, was z.B. zusätzlich zu der Einführung saurer bzw. anionischer Gruppen erfolgen kann. Das kann geschenen durch Einbau von difunktionellen Polyethylenoxid-dialkoholen in der Komponente a) in die Hauptkette oder bevorzugt durch monofunktionelle Polyethergruppen in terminaler oder lateraler Stellung. Der Anteil an Polyethylenoxidgruppen wird bevorzugt so niedrig wie möglich gewählt; es soll bei gegebener niedriger Säurezahl gerade eine stabile Dispersion erhalten werden.

Der Einbau von Polyethylenoxid-Gruppen in die Komponente A) kann beispielsweise auch durch Mitverwendung von Monoisocyanaten der allgemeinen Formel

$$OCN - R - (NHCO - O - X - Y)_n \qquad V$$

n = 1 bis 4 bei der Umsetzung von Preaddukt I) mit Prekondensat II) erfolgen, wobei X für eine Polyalkylenoxidkette mit 8 bis 90, z.B. 10 bis 90, vorzugsweise über 20 und bevorzugt unter 50 Kettengliedern steht, wovon mindestens 8, bevorzugt mindestens 10 Ethylenoxideinheiten sind. R ist ein zweiwertiger linearer, verzweigter oder ringförmiger Kohlenwasserstoffrest, wie er in Polyisocyanaten, bevorzugt Diisocyanaten üblich ist. Y ist ein monofunktioneller Rest eines Kettenstarters wie beispielsweise -OR' oder $-NR_2'$, wobei R' eine Alkylgruppe eines einwertigen Kohlenwasserstoffrestes mit 1 bis 8 Kohlenwasserstoffatomen, vorzugsweise ein unsubstituierter Alkylrest oder speziell eine Methylgruppe bedeutet. Solche Verbindungen können z.B. aus Di- oder Polyisocyanaten durch Umsetzung mit entsprechenden Polyalkylenetheralkoholen hergestellt werden.

Die für die Umsetzung eingesetzte Alkonolkomponente ist ein Polyalkylenetheralkohol, bei dem die Alkylengruppe 2 bis 4 C-Atome hat, bevorzugt 2. Der Polyalkylenetheralkohol ist bevorzugt einwertig und enthält eine mindestens 8, bevorzugt mindestens 10 Ethylenoxideinheiten umfassende Polyethylenetherkette. Die Herstellung einer monofunktionellen Komponente im Molekulargewichtsbereich von 500 bis 5000 erfolgt in bekannter Weise durch wasserfreie Alkoxylierung eines monofunktionellen Starters wie beispielsweise einwertige, lineare oder verzweigte Alkohole verschiedener Kettenlänge unter Verwendung von Ethylenoxid und gegebenenfalls weiteren Alkylenoxiden. Bevorzugt wird die stufenweise Umsetzung von erstens Ethylenoxid und zweitens einem höheren Alkylenoxid. Die Polyalkylenoxidkette besteht mindestens zu 40 %, vorzugsweise mindestens zu 65 % aus Ethylenoxid-Einheiten und der Rest z. B. aus Propylenoxid-, Butylenoxid- oder Styroloxid-Einheiten. Beispiele für Kettenstarter sind Methanol, Ethanol, n-Propanol oder n-Butanol, aber auch sekundäre Amine wie Methylbutylamin. Die so erhaltenen Polyethermonoalkohole werden mit beliebigen organischen Polyisocyanaten in Abhängigkeit von der Funktionalität des organischen Polyisocyanats in solchen Mengenverhältnissen gewählt, daß das entstehende Umsetzungsprodukt im statistischen Mittel nur eine freie NCO-Gruppe aufweist. Bei Verwendung eines Triisocyanats empfiehlt sich daher ein NCO/OH-Verhältnis

von 3 : 2. Bei der Reaktion von Isophorondiisocyanat wird vorzugsweise in einem NCO/OH-Verhältnis von 2 : 1 gearbeitet. Im statistischen Mittel liegt das NCO/OH-Äquivalentverhältnis bei 2,2 : 1 bis 1,2 : 1.

Die Umsetzung der Polyethermonoalkohole mit den Polyisocyanaten kann in Gegenwart oder Abwesenheit von mehreren Lösemitteln erfolgen, bei mäßig erhöhten Temperaturen von beispielsweise 20 bis 130°C. Vorzugsweise wird lösemittelfrei gearbeitet. Wird für die Reaktion ein hoher Überschuß an Diisocyanat verwendet, so kann dieser im Vakuum abdestilliert werden oder er dient dem Aufbau weiterer NCO-Gruppen enthaltender Verbindungen, die in die Kette eingebaut werden.

Für den lateralen Einbau von Polyether-Ketten in Polyurethanharze eignen sich als Komponente a) vorzugsweise Dialkohole oder Diamine, die über mindestens eine weitere H-reaktive (mit Isocyanat reaktionsfähige) Gruppe mit den vorher beschriebenen hydrophilen Isocyanat-Verbindungen der allgemeinen Formel V reagiert haben. Zu den bevorzugten bifunktionellen hydrophilen Aufbau-Komponenten mit seitenständigen Ethylenoxid-Ketten gehören Verbindungen der allgemeinen Formel

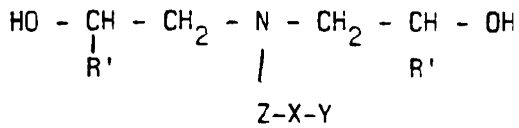 VI

oder

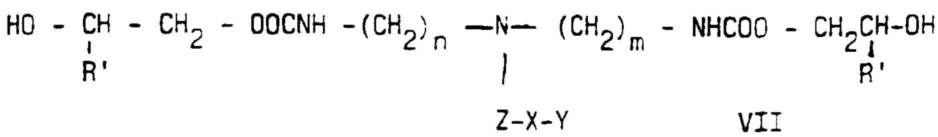

VII

worin n und m unabhängig voneinander 2 oder 3 sind, Z eine einfache chemische Bindung, eine gegebenenfalls substituierte Methylengruppe oder bevorzugt eine -CONH-R-NHCO-Gruppe bedeutet und X, Y, R' und R die für die Formeln I und V beschriebene Bedeutung haben. Beispiele für geeignete Ausgangskomponenten zur Umsetzung mit den hydrophilen Monoisocyanaten sind Diethanolamin, Diisopropanolamin, Dipropanolamin, Bis-(2-hydroxy-2-phenylethyl)-amin oder die Umsetzungsprodukte von Ethylen- oder Propylencarbonat mit Dialkylentriaminen wie Diethylentriamin, Dipropylentriamin oder mit Hydroxyalkyl-aminoalkylenaminen wie N-Aminoethyl-ethanolamin.

Eine Herstellungsvariante ergibt sich durch die Reaktion von Polyalkylentriaminen mit hydrophilen Monoisocyanaten nach Umsetzung der primären Aminogruppen mit Ketonen wie Methylisobutylketon. Die so hergestellten Ketimingruppen werden nach beendeter Reaktion mit den hydrophilen Monoisocyanaten durch Hydrolyse wieder abgespalten.

Eine weitere Möglichkeit zur Einführung von hydrophilen Alkylenoxidgruppen ist die Mitverwendung von Diisocyanaten mit mindestens einer seitenständigen hydrophilen Einheiten in der Komponente b). Solche Diisocyanate werden erhalten durch die Umsetzung von Polyisocyanaten mit mehr als zwei Isocyanatgruppen, bevorzugt drei und mehr Isocyanatgruppen mit Monohydroxy-polyalkylenoxiden. Das Äquivalentverhältnis von Isocyanat zu Alkoholgruppen beträgt hierbei 2 : 1 bis 1,6 : 1 in Abhängigkeit von der Funktionalität des gewählten Polyisocyanats. Zu diesen bifunktionellen hydrophilen Aufbaukomponenten mit seitenständiger Ethylenoxidkette gehören Verbindungen der allgemeine Formel

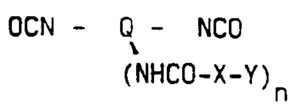 VIII

worin n = 1 bis 3, bevorzugt 1, und 0 der beliebige Kohlenwasserstoffrest eines höherfunktionellen Polyisocyanats ist, wie z.B. das vorstehend für die Formel V definierte R, und worin X und Y wie vorstehend für die Formel V definiert sind. Beispiele hierfür sind die molmäßige Umsetzung von Hexandiisocyanurat oder die entsprechende Reaktion mit

einem Umsetzungsprodukt von Isophorondiisocyanat oder Tetramethylen-xylylendiisocyanat mit Trimethylolpropan.

Bei der Herstellung des urethanisierten Polyester- oder Alkydharzes der Komponente A) wird das Äquivalentgewicht des eingesetzten Diisocyanats in Abstimmung mit den eingesetzten OH-Verbindungen so gewählt, daß das fertiggestellte Harz eine möglichst hohe Molmasse erhält. Die Reaktion kann auch in Gegenwart eines mit Isocyanaten nicht reaktiven Lösemittels erfolgen, das nach dem Dispergieren in Wasser, gegebenenfalls unter Vakuum, abdestilliert wird. Ein anderer Weg zur Überwindung der hohen Viskosität ist auch die Herstellung einer wäßrigen Dispersion von dem säure- bzw. carboxylgruppenhaltigen Polyester oder Alkydharz und eine anschließende Kettenverlängerung durch Zusatz von Diisocyanaten.

Beispiele für Fettsäuren, die als Komponente d) erfindungsgemäß mitverwendet werden können, werden beispielsweise lineare oder verzweigte Monocarbonsäuren mit 6 bis 35 C-Atomen verstanden. Die Fettsäuren können nicht-trocknend oder trocknend sein. Nicht-trocknende Fettsäuren werden bevorzugt in Decklacken, trocknende Fettsäuren bevorzugt für Füller und Grundierungen verwendet.

Beispiele für geeignete nicht-trocknende Fettsäuren sind bevorzugt gesättigte und einfache ungesättigte lineare oder verzweigte aliphatische Monocarbonsäuren, bevorzugt mit einer Kohlenstoffanzahl von 6 bis 18, besonders bevorzugt mit 8 bis 14 C-Atomen.

Beispiele für geeignete trocknende Fettsäuren sind ungesättigte Fettsäuren oder Fettsäuregemische, die mindestens eine Monocarbonsäure mit mindestens zwei isoliert oder konjugiert ungesättigten Doppelbindungen enthalten und eine Jodzahl über 125 haben. Bevorzugt werden ungesättigte Fettsäuren mit einer linearen Kohlenstoffkette mit 16 bis 18 Kohlenstoffatomen.

Spezielle Beispiele für geeignete nicht-trocknende Fettsäuren sind 2-Ethylhexansäure, Isononansäure, Versaticsäure, Neodecansäure oder Cocosfettsäure sowie Ölsäure. Als trocknende Fettsäuren werden beispielsweise bevorzugt ungesättigte Monocarbonsäuren mit einer Jodzahl über 125 und einer C-18-Kohlenstoffkette verstanden. Hierunter fallen besonders isoliert ungesättigte Fettsäuren mit zwei oder drei isolierten Doppelbindungen verschiedener sterischer Konfiguration oder entsprechende Konjugensäuren. Solche Fettsäuren sind beispielsweise in natürlicnen Ölen, wie Leinöl, Sojaöl, Saffloröl, Baumwollsaatöl, Sonnenblumenöl, Erdnußlk oder Ricinusöl, Holzöl und Ricinenöl enthalten. Die daraus gewonnenen ungesättigten Fettsäuren sind Leinölfettsäure, Safflorölfettsäure, Tallölfettsäure, Baumwollsaatfettsäure, Erdnußölfettsäure, Sonnenblumenölfettsäure, Holzölfettsäure oder Ricinenfettsäure.

Es können auch sogenannte technische Öle als Fettsäuren eingesetzt werden, die im allgemeinen Mischungen von cis-Linolensäure, Linolsäure, Ölsäure und Stearinsäure sind. Die technischen Öle bzw. Fettsäuren können als solche eingesetzt werden, oder sie werden durch Umesterungsreaktionen oder nach Dehydratisierungsreaktionen (Ricinenfettsäure) in den Polyester eingebaut.

Bei Verwendung von mehrfach ungesättigten Fettsäuren werden besonders Devorzugt Mischungen aus isoliert und konjugiert ungesättigten Fettsäuren, z.B. 10 bis 80 Gew.-% konjugiert ungesättigten Fettsäuren, eingesetzt. Der Anteil an eingebauten gesättigten und ungesättigten Fettsäuren beträgt bevorzugt 20 bis 50 Gew.-%, bezogen auf den Harzfestkörper. Dieser Anteil an gesättigten und ungesättigten Fettsäuren enthält besonders bevorzugt 10 bis 80 Gew.-% ungesättigte Fettsäuren mit konjugierten Doppelbindungen. Für nichtvergilbende Harze werden gesättigte Monocarbonsäuren oder Fettsäuren mit einer oder zwei isolierten Doppelbindungen bevorzugt. Die gewonnenen Fettsäuren können durch fraktionierte Destillation, Isomerisierung oder Konjugierung chemisch optimiert sein.

Unter Monocarbonsäuren, die mit den Fettsäuren zumindest teilweise mitverwendet werden können, werden beispielsweise alicyclische oder aromatische Monocarbonsäuren mit 6 bis 35 C-Atomen verstanden. Sie können gegebenenfalls substituiert sein. Zur Modifizierung der Eigenschaften des Urethanalkydharzes können bis zu 15 Gew.-% der ungesättigten Fettsäuren durch andere Monocarbonsäuren wie Benzoesärue, tert.-Butylbenzoesäure, Hexahydrobenzoesäure oder Abietinsäure ersetzt sein.

Bei der Polyisocyanatkomponente B) handelt es sich um beliebige organische Polyisocyanate mit aliphatisch, cycloaliphatisch, araliphatisch und/oder aromatisch gebundenen, freien Isocyanatgruppen, die bei Raumtemperatur flüssig sind oder durch Zusatz organischer Lösemittel verflüssigt sind oder in gelöster Form bei 23°C im allgemeinen eine Viskosität von 0,5 bis 2000 mPas, vorzugsweise über 1 und unter 1000 mPas, besonders bevorzugt unter 200 mPas aufweisen. Bevorzugt handelt es sich bei der Polyisocyanatkomponente B) um Polyisocyanate oder Polyisocyanatgemische mit ausschließlich aliphatisch und/oder cycloaliphatisch gebundenen Isocyanatgruppen mit einer mittleren NCO-Funktionalität von 1,5 bis 5, bevorzugt 2 bis 3. Sie haben bevorzugt einen NCO-Gehalt von über 5 Gew.-%, bevorzugt unter 35 Gew.%, besonders bevorzugt unter 25 Gew.-%.

Falls erforderlich, können die Polyisocyanate in Abmischung mit geringen Mengen an inerten Lösemitteln zum Einsatz gelangen, um die Viskosität auf einen Wert innerhalb der genannten Bereiche abzusenken. Die Menge derartiger Lösemittel wird jedoch maximal so bemessen, daß in den letztendlich erhaltenen erfindungsgemäßen Beschichtungsmitteln maximal 20 Gew.-% Lösemittel, bevorzugt unter 10 %, bezogen auf die Menge an Wasser, vorliegt, wobei auch das gegebenenfalls in den Polyurethandispersionen noch vorliegende Lösemittel mit in die Berechnung eingeht. Für die Polyisocyanate geeignete Lösemittel sind beispielsweise aromatische Kohlenwasserstoffe wie Benzol, Toluol, Xylol, Chlorbenzol, Ester wie Ethylacetat, Butylacetat, Methylglykolacetat, Ethylglykolacetat, Methoxypropylacetat,

Ether wie Tetrahydrofuran, Dioxan, vollveretherte Mono- oder Diglykole von Ethylenglykol oder Propylenglykol wie Diethylenglykol oder Dipropylenglykoldimethylether, Ketone wie Aceton, Methylethylketon, halogenhaltige Lösemittel wie Methylenchlorid oder Trichlormonofluorethan.

Bei den erfindungsgemäß geeigneten, jedoch weniger bevorzugten aromatischen Polyisocyanaten handelt es sich insbesondere um übliche sogenannte "Lackpolyisocyanate" auf Basis von 2,4-Diisocyanatotoluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan und anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanato-isocyanurate, die ebenfalls im Anschluß an ihre Herstellung vorzugsweise destillativ von überschüssigen monomeren Diisocyanaten befreit worden sind.

Als Komponente B) besonders gut geeignet sind beispielsweise "Lackpolyisocyanate" auf Basis von Hexamethylendiisocyanat, 1-Isocyanato-3,3,5-trimethyl-5-isocyanatomethyl-cyclohexan (IPDI) und/oder Bis(isocyanatocyclohexyl)-methan und die an sich bekannten Biuret-, Allophanat-, Urethan- und/oder Isocyanuratgruppen aufweisenden Derivate dieser Diisocyanate, die im Anschluß an ihre Herstellung, vorzugsweise durch Destillation von überschüssigem Ausgangsdiisocyanat bis auf einen Restgehalt von weniger als 0,5 Gew.-% befreit worden sind. Hierzu gehören Biuretgruppen aufweisende Polyisocyanate auf Basis von Hexamethylendiisocyanat, die aus Gemischen von N,N',N"-Tris(6-isocyanatohexyl)-biuret mit untergeordneten Mengen seiner höheren Homologen, sowie die cyclischen Trimerisate von Hexamethylendiisocyanat, die im wesentlichen aus N,N',N"-Tris-(6-isocyanatohexyl)-isocyanurat im Gemisch mit untergeordneten Mengen von seinen höheren Homologen bestehen. Insbesondere bevorzugt werden Gemische aus Uretdion- und/oder Isocyanuratgruppen aufweisenden Polyisocyanaten auf Basis von Hexamethylendiisocyanat, wie sie durch katalytische Oligomerisierung von Hexamethylendiisocyanat unter Verwendung von Trialkylphosphinen entstehen. Um das Verteilen der Komponente B) in der wäßrigen Dispersion A) zu erleichtern, kann das Polyisocyanat zumindest anteilweise mit Polyethylenoxidalkohol oder ionischen Gruppen modifiziert werden. Eine solche Arbeitsweise ist jedoch bei den erfindungsgemäß eingesetzten fettsäuremodifizierten Polyester- und/oder Polyurethanharzen nicht unbedingt erforderlich. Als vorteilhaft hat sich eine hydrophobe Modifizierung mit langkettigen Fettalkoholen erwiesen.

Für den erfindungsgemäßen Einsatz als Komponente B) werden besonders bevorzugt sterisch behinderte Polyisocyanate der allgemeinen Formel

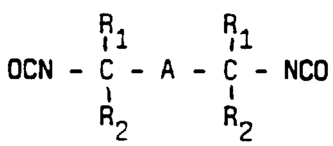

(IX)

wobei

$R_1$ = H oder $R_2$,
$R_2 = C_nH_{2n+1}$ mit n = 1 bis 6 sind.

Die Substituenten $R_1$ und $R_2$ sind entweder linear oder verzweigt, gleich oder ungleich. Das Grundgerüst A kann aus einer einfachen Bindung, einem aromatischen oder alicyclischen Ring oder aus einer aliphatischen linearen oder verzweigten C-Kette mit 1 bis 12 C-Atomen bestehen.

Besonders bevorzugt werden Polyisocyanate mit 4 bis 25, vorzugsweise 4 bis 16 C-Atomen, die in 2-Stellung zur NCO-Gruppe eine oder zwei lineare, verzweigte oder cyclische Alkylgruppen mit 1 bis 12, bevorzugt 1 bis 4 C-Atomen enthalten.

Beispiele hierfür sind 1,1,6,6-Tetramethyl-hexamethylendiisocyanat, 1,5-Dibutyl-pentamethyldiisocyanat, p- oder m-Tetramethylen-xylylendiisocyanat der allgemeinen Formeln

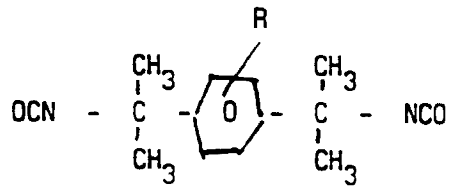

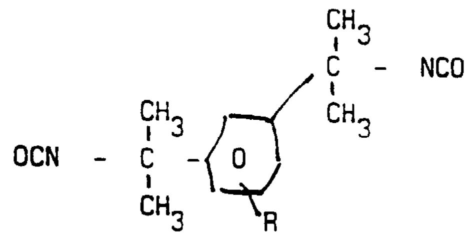

worin R die Bedeutung von H oder $C_1$ - $C_4$-Alkyl hat, und die entsprechenden hydrierten Homologen. Diese Diisocyanate können ebenfalls in geeigneter Weise zu höherfunktionellen Verbindungen umgesetzt werden, beispielsweise durch Trimerisierung oder Umsetzung mit Wasser oder Trimethylolpropan. Tetramethylen-xylylendiisocyanat und sein Reaktionsprodukt mit Trimethylolpropan werden besonders bevorzugt. Es können auch trimerisierte Diisocyanate verwendet werden, deren Diisocyanate nur eine sterisch gehinderte Isocyanatgruppe enthalten, wie z.B. 3(4)-Isocyanatomethyl-1-methylcyclohexyl-isocyanat.

Die Polyisocyanate können auch in der Form Isocyanat-modifizierter Harze verwendet werden. Für den Einbau in harzähnliche Grundkörper werden Isocyanatverbindungen verwendet, die zwei unterschiedlich reaktive NCO-Gruppen enthalten wie beispielsweise m- oder p-Dimethyltoluylendiisocyanat (oder 2-Isocyanato-2-(4-isocyanatophenyl)-propan) oder die neben einer sterisch behinderten Isocyanatgruppe noch eine radikalisch polymerisierbare Doppelbindung enthalten wie beispielsweise Allylmonoisocyanat, Vinyl-phenylisocyanat, (Meth)acrylsäure-β-isocyanatoethylester, (Meth)acryloylisocyanat oder bevorzugt m- oder p-Isopropenylalpha,alpha-dimethylbenzylisocyanat. Mit Hilfe dieser reaktiven Bausteine können entweder durch Umsetzung von OH-Gruppen von Polyacrylaten, Polyestern oder Polyurethanen mit der reaktiveren Isocyanatgruppe oder durch Einpolymerisieren der Doppelbindung in geeignete Polymerisatharze isocyanatgruppenhaltige Vernetzer mit einer höheren Molmasse und Funktionalität hergestellt werden.

Eine Gruppe geeigneter aliphatischer Polyisocyanate wird durch selektive Reaktion silylierter Polyalkohole mit Isocyanaten hergestellt, wie beispielsweise das Esterisocyanat auf Basis von Hexandiisocyanat und Pentaerythrit. Sie weisen besonders günstige niedrige Viskositäten auf.

Die Polyisocyanatkomponente B kann aus beliebigen Mischungen der beispielshaft genannten Di- und Polyisocyanate bestehen, wobei die Mischung besonders aus reaktiveren und sterisch behinderten Polyisocyanaten sowie aus zwei und höherfunktionellen Polyisocyanaten bestehen.

Für eine Steigerung der Topfzeit hat es sich beispielsweise bewährt, beliebige aliphatische Isocyanate, bevorzugt Diisocyanate, mit den vorstehend genannten sterisch behinderten Polyisocyanaten, beispielsweise der allgemeinen Formel IX zu mischen.

Es werden bevorzugt im Gemisch 1 bis 60 Gew.-%, speziell mehr als 5 Gew.-% und weniger als 40 Gew.-% Diisocyanate nach der allgemeinen Formel IX, bzw. ihre hönerfunktionellen Derivate, eingesetzt. Die Gewichtsprozente beziehen sich auf die als Komponente B) eingesetzten gesamten Polyisocyanate.

Nach beendeter Herstellungsreaktion werden die carboxylgruppenhaltigen Polyester und/oder Alkydharze, sowie die urethanisierten Polyester und/oder Alkydharze in eine wäßrige Dispersion überführt. Hierzu kann z.B. die organische Polymerlösung in eine meist vorgewärmte Wasserphase eingeleitet und gegebenenfalls das organische Lösemittel destillativ, im allgemeinen unter Anlegen eines Vakuums, entfernt werden.

Um eine gute Dispergierbarkeit in Wasser zu erreichen, wird entweder vor dem Emulgieren in das Harz oder in der Wasserphase ein Neutralisationsmittel, wie z.B. anorganische Basen, Ammoniak oder primäre, sekundäre oder tertiäre Amine oder Aminoalkohole zugesetzt, um saure Gruppen zumindest teilweise in anionische Gruppen überzuführen. Als anorganische Basen dienen beispielsweise Natriumhydroxid, Kaliumhydroxid oder Lithiumhydroxid. Als Amine werden z.B. Trimethylamin, Mono-, Di- und Triethylamin, Mono-, Di- und Triethanolamin, Dimethylethanolamin, Dimethylisopropanolamin, Methyldiethanolamin, Dimethylaminoethylpropanol oder N-Methyl-Morpholin eingesetzt.

Bevorzugt werden flüchtige tertiäre Monoamine, die keine isocyanatreaktiven Gruppen enthalten. Die Neutralisationsmittel können sowohl im stöchiometrischen Unter- als auch Überschuß verwendet werden. Bevorzugt ist ein Neutralisationsbereich von 50 bis 100 % der vorhandenen Carboxylgruppen. Bei der Herstellung der Dispersion ist darauf zu achten, daß mit steigendem Neutralisationsgrad durch den Polyelektrolytcharakter der Polymeren eine deutliche Viskositätszunahme erfolgen kann. Um einen möglichst hohen Festkörper zu erhalten, wird daher im allgemeinen mit der für die Stabilität der Dispersion gerade ausreichenden Menge an Neutralisationsmittel gearbeitet. Ein Zusatz von geringen Anteilen Polyamin mit zwei oder mehr sekundären und/oder primären Aminogruppen ist für die Verringerung der Blasenbildung beim Spritzen der Lacke von Vorteil. Die Aminogruppen können an aliphatischen, cycloaliphatischen, ar-aliphatischen oder aromatischen Kohlenwasserstoffgrundgerüsten mit linearer, verzweigter oder cyclischer Struktur gebunden sein. Diamine werden bevorzugt. Geeignete Beispiele sind Ethylendiamin, 1,2- und 1,3-Propandiamin, 1,4-Butandiamin, 2-Methyl-pentan-diamin, Hexandiamin-1,6, 3-Amino-1-methyl-amino-propan, N-Methyl-dipropylentriamin, 3-Amino-1-cyclohexylaminopropan, N,N'-Dimethylethylendiamin, 2,2-Dimethyl-1,3-propandiamin, 1-Amino-3-amino-3,5,5-trimethyl-cyclohexan (Isophorondiamin), 1,2- und 1,4-Cyclohexandiamin, 4,4-Diamino-dicyclohexylmethan, 3,3-Dimethyl-4,4'-diaminodicyclohexylamin, Piperazin, 2,5-Dimethylpiperazin, N,N'-Bis-(2-aminoethyl)-piperazin, p, m oder o-Phenylendiamin, 4,4'-Diamino-diphenylmethan, Polyoxypropylenamine wie 4,9-Dioxadodecan-1,12-diamin oder 4,7,10-Trioxa-tridecan-1,13-diamin und/oder Aminoethyl-ethanolamin. Zur Gewährleistung der Stabilität der Lack/Härter-Emulsion muß eine ausreichend hohe Konzentration der Neutralisationsmittel erhalten bleiben. Das wird durch ein Equivalentverhältnis von tertiären Aminen zu NH-funktionellen Polymainen von 2 : 1 bis 6 : 1 bei einem Neutralisationsgrad von 60 bis 110 %, bevorzugt über 70 und unter 100 % erreicht. Die erhaltenen wäßrigen Dispersionen weisen im allgemeinen noch einen Gehalt an Restlösemittel von unter 10 Gew.-%, vorzugsweise von unter 5 Gew.-% auf. Die praktisch restlose Entfernung auch von höher als Wasser siedenden Lösemitteln ist beispielsweise durch azeotrope Destillation möglich.

Der Festkörpergehalt der erhaltenen gegebenenfalls fettsäuremodifizierten Polyurethandispersion beträgt beispielsweise 20 bis 60 Gew.-%, bevorzugt über 30 Gew.-% und unter 45 Gew.-%.

Vor der Zugabe der Polyisocyanatkomponente B können der Polykondensat-Komponente A), d.h. der Dispersion bzw. Lösung der Polymere, die üblichen Hilfs- und Zusatzmittel der Lacktechnologie einverleibt werden. Diese können auch in der Polyisocyanatkomponente B) enthalten sein.

Die erfindungsgemäßen Überzugsmittel weisen den Vorteil auf, daß sie ohne äußeren Zusatz von nicht einbaubaren externen nicht-ionischen Emulgatoren formuliert werden können. Selbstverständlich ist es jedoch möglich, bei der Formulierung übliche Emulgatoren zuzusetzen. Hierzu sind besonders nicht-ionischen Emulgatoren bereitet. Verwendbare Emulgatoren sind beispielsweise Stoffe, deren Moleküle einen ausgesprochen hydrophilen Bestandteil mit einem ausgesprochenen hydrophoben verbinden. Als hydrophiler Teil dienen anionische, kationische oder amphotere ionische Gruppen, sowie nicht-ionische Gruppen. Als hydrophober Bestandteil dienen aromatische, cyclische, lineare oder verzweigte aliphatische Ketten verschiedener Kettenlänge, gegebenenfalls mit Ester- oder Amidgruppen, die endständig mit anionischen, kationischen, amphoteren oder nicht-ionischen Gruppen versehen sind. Bevorzugt werden Emulgatoren, deren Gruppen die Vernetzungsreaktion der Polyisocyanate bei der Filmbildung nicht durch Blasenbildung stören. Beispiele hierfür sind Reaktionsprodukte von Fettsäuren, Fettsäureamiden, Alkoholen verschiedener Kettenlänge oder alkylierten Phenolen mit Alkylenoxiden mit 10 bis 70 Alkylenoxideinheiten; bevorzugt werden reine Polyethylenoxideinheiten oder gemischte Ethylen-propylenoxidketten in Form von Blockcopolymeren. Es können beispielsweise übliche Handelsprodukte eingesetzt werden. Besonders geeignet sind Emulgatoren, die zusätzlich solche reaktiven Gruppen enthalten, die während der Verfilmung in das Netzwerk einreagieren, beispielsweise über OH-reaktive Gruppen, wie sie schon beschrieben sind, als Reaktionsprodukte von hydrophilen Monoisocyanaten mit Aminoalkoholen.

Aufgrund ihrer Struktur können sie bevorzugt als nicht-ionische Emulgatoren den Dispersionen der Komponente A) zugesetzt werden. Der frei bewegliche und gut wirksame Emulgator wird bei der Verfilmung des 2-K-Systems in den Film eingebaut und danach in seiner Emulgierwirkung eingeschränkt.

Wenn der Zusatz von Emulgatoren notwendig ist, dann werden bevorzugt solche verwendet, die beim Vernetzen in den Film eingebaut werden.

Die erfindungsgemäßen Dispersionen können, falls gewünscht, vor, während oder nach ihrer Herstellung mit anderen physikalisch trocknenden oder isocyanathärtenden Polymeren, z.B. Polyacrylaten, Polyurethanen sowie Hartharzen, unmodifizierten und modifizierten Polymeren, wie sie etwa bei H. Kittel, Lehrbuch der Lacke und Beschichtungen, Bd. I, Teil 1, S. 122 bis 445, beschrieben sind, kombiniert werden. Tragen die zusätzlichen Bindemittel reaktive Gruppen wie beispielsweise Hydroxylgruppen, so sind diese bei dem Mischungsverhältnis der Komponenten A und B zu berücksichtigen. Bevorzugte Hartharze sind natürliche oder synthetische Hartharze wie Kolophoniumester, Maleinatharze oder gegebenenfalls mit Fettsäuren modifizierte Phenolharze, sowie OH-gruppenhaltige oder OH- und COOH-gruppenhaltige Polyacrylatharze, Polyurethanharze oder Polyester in Lösungs- oder Dispersionsform.

Die erfindungsgemäßen Überzugsmittel bestehen aus den oben erwännten OH-gruppenhaltigen wasserdispergierbaren Bindemitteln und den Isocyanaten. Sie können als Hilfs- und Zusatzmittel beispielsweise Pigmente/Füllstoffe,

lacktechnische Additive, nicht-ionische Emulgatoren, Reaktivverdünner, Verlaufsmittel, Entschäumer, Rheologiehilfsmittel, Katalysatoren, Siccative, Lichtschutzmittel, Verdicker sowie weitere Bindemittel enthalten. Sie dienen zur Beeinflussung von lacktechnischen Eigenschaften, wie z.B. Aushärtungsdauer, Oberflächengüte oder zur Beeinflussung von anwendungstechnischen Eigenschaften wie z.B. der Viskosität.

Um eine gute Dispergierbarkeit der Polyisocyanate zu erzielen, kann eine geeignete niedrige Viskosität eingestellt werden. Hierzu dient auch das Lösen von hochviskosen oder festen Polyisocyanaten in wassermischbaren organischen Lösemitteln, die nicht oder nur langsam mit Isocyanaten reagieren. Nichtreaktive Lösemittel sind beispielsweise Glykoldialkylether, wie Glykoldimethylether, Ester wie Ethylglykolacetat, Ketone wie Acetaon oder Dioxan oder N-Methylpyrrolidon. Bevorzugt werden Alkohole mit sterisch behinderten Alkoholgruppen, Ketonalkohole oder Alkoxyalkanole, wie Butoxyethanol, Butyldiglykol, Methoxyisopropanol oder Diacetonalkohol. Mit ihnen wird kurz vor der Verarbeitung (beispielsweise bis maximal 1 bis 2 Stunden vor Vernetzung) ohne Erwärmen eine Polyisocyanat-Lösung hergestellt, die bei einem Festkörper über 40 Gew.-%, bevorzugt 50 - 95 Gew.-%, eine Viskosität von 0,5 bis 2000 mPas, bevorzugt über 1 und unter 20 mPas hat. Durch dieses Verfahren ist eine feine Verteilung des Polyisocyanats im Überzugsmittel erreicht, ohne Einbau von hydrophilen Gruppen in das Polyisocyanat. Außerdem sind auch halbviskose oder feste Polyisocyanate ohne Probleme verarbeitbar.

Für die erfindungsgemäßen Überzugsmittel sind als Pigmente die üblichen Pigmente, wie sie beispielsweise in DIN 55 944 beschrieben sind, geeignet. Es werden beispielsweise Ruß, Titandioxid, feindisperses Siliciumdioxid, Aluminiumsilikat, Metallpulver oder -plättchen, organische und anorganische Farbpigmente, Korrosionsschutzpigmente, wie Blei- und Chromatverbindungen, Metalleffekt- und Interferenzpigmente eingesetzt. Zusätzlich zu den Pigmenten und Füllstoffen können gegebenenfalls übliche organische Farbstoffe eingesetzt werden. Ebenfalls ist es möglich, Anteile von vernetzten organischen Mikroteilchen zuzusetzen.

Die erfindungsgemäßen Überzugsmittel können nach an sich bekannten Verfahren zur Herstellung der Überzugsmittel aus den Einzelkomponenten formuliert werden. Beispielsweise ist es möglich, die Pigmente in einem besonders geeigneten Anreibeharz zu dispergieren und gegebenenfalls auf die notwendige Kornfeinheit zu vermahlen. Eine andere Arbeitsweise sieht vor, die Pigmente in der wäßrigen Dispersion der Bindemittelkomponente A) zu vermahlen.

Die Auswahl der Pigmente, Füllstoffe und die Bedingungen des Mahlprozesses werden so gewählt, daß die Stabilität der wäßrigen Dispersion nicht beeinflußt wird. Nach dem Dispergieren der Pigmente ist es möglich, weitere Bindemittelanteile zuzufügen. Dabei kann es sich um die erfindungsgemäßen ölfreien oder fettsäuremodifizierten Polyurethanharze handeln sowie gegebenenfalls weitere der oben beschriebenen Bindemittel. Gegebenenfalls können weitere lacktechnische Hilfsmittel zur Beeinflussung von Eigenschaften, wie z.B. Dispergierbarkeit, zugesetzt werden.

Eine weitere Arbeitsweise mischt die neutralisierten, gegebenenfalls fettsäuremodifizierten Polyurethanharze, oder andere übliche Pastenharze, zunächst mit wenig Wasser, gegebenenfalls unter Zugabe von Füllstoffen, Pigmenten, Farbstoffen und dergleichen, und dispergiert diese Mischung auf einem Walzenstuhl oder in einer Kugelmühle zu Pasten. Aus diesen können dann durch Verdünnen mit weiterem Wasser und gegebenenfalls unter Zugabe weiterer Harz-Dispersionen und Additiven die gebrauchsfertigen Lackzubereitungen hergestellt werden. Zum Herstellen der Pigmentpaste können auch wasserfreie Bindemittelsysteme verwendet werden.

Die Komponente A) des erfindungsgemäßen Überzugsmittels ist wäßrig, sie enthält bevorzugt weniger als 20 Gew.-%, bevorzugt unter 10 Gew.-%, besonders bevorzugt unter 5 %, organische Lösungsmittelanteile. Sie ist lagerstabil und zeigt auch nach längerem Stehen keine Phasentrennung. Der Festkörper der Komponente A) beträgt beispielsweise zwischen 25 und 70 Gew.-%, bevorzugt zwischen 35 und 60 Gew.-%.

Gegebenenfalls können auch Pigmente oder lacktechnische Hilfsstoffe in der Komponente B) vorhanden sein. Diese lacktechnische Komponente ist im allgemeinen nicht wäßrig. Sie ist jedoch in der wäßrigen Dispersion der Komponente A) dispergierbar. Sie kann gegebenenfalls geringe Anteile an organischen Lösemitteln enthalten, um eine zur Dispergierung geeignete Viskosität einzustellen. Es ist darauf zu achten, daß die Additive nicht mit der Isocyanatkomponente reagieren dürfen. Das kurzzeitige Mischen von Isocyanaten mit Alkoholen, wie Butoxyethanol oder Diacetonalkohol, ist möglich, besonders bei sterisch gehinderten Polyisocyanaten, die langsam reagieren.

Die erfindungsgemäßen Überzugsmittel können durch übliche Techniken, wie z.B. Tauchen, Spritzen, Rollen, auf die zu lackierenden Materialien aufgetragen werden. Spritzen ist bevorzugt. Sie sind besonders zum Spritzen dicker Schichten geeignet. Danach vernetzt der aufgetragene Film.

Das Vernetzen kann bei Temperaturen von beispielsweise 0 bis 150°C durchgeführt werden. Die erfindungsgemäßen Überzugsmittel können vorteilhaft bei relativ niedrigen Temperaturen gehärtet werden, beispielsweise bei Temperaturen über 10°C, bevorzugt über 25°C und unter 80°C, insbesondere unter 60°C. Sie sind daher besonders für die Lackierung thermisch empfindlicher Substrate geeignet. Gegebenenfalls kann dem Vernetzen eine Ablüftzeit vorgeschaltet werden.

Die applizierten Schichtdicken richten sich nach dem Verwendungszweck des Überzugsmittels. Beispielsweise weisen Klarlacküberzüge eine Schichtdicke bis zu 60 µm auf, pigmentierte Basis- oder Decklacküberzüge von 10 bis 50 µm, Überzüge als Füller oder Steinschlagschutzüberzüge eine Schichtdicke von 30 bis 100 µm und Überzüge als Korrosionsschutzgrundierung eine Schichtdicke von 20 bis 70 µm.

Mit den erfindungsgemäßen Überzugsmitteln können beim Spritzen in menreren Spritzgängen die üblichen Schichtdicken weit überschritten werden, ohne daß eine Blasenbildung auftritt. Hiermit wird die Sicherheit der Applikation wesentlich verbessert und es treten z.B. keine Störungen an schwer lackierbaren Stellen einer Autokarosserie auf.

Als Substrate sind beliebige Untergründe geeignet, beispielsweise Metallsubstrate, wie Eisen, Aluminium oder Zink, nichtmetallische Substrate, wie mineralische Substrate (z.B. Beton, Glas), Holz, Kunststoffsubstrate, wie Polyolefine, Polycarbonate, Polyurethane sowie gegebenenfalls mit Vorbeschichtungen versehene Substrate. Bei der Applikation kann auf ein getrocknetes oder vernetztes beschichtetes Substrat aufgetragen werden. Es ist auch möglich, nass-in-nass zu arbeiten. Hierzu kann das erfindungsgemäße Überzugsmittel auf einen mit einem nicht vernetzten Überzugsmittel versehenen Untergrund, gegebenenfalls nach kurzer Ablüftphase aufgetragen werden. Auch ist es möglich auf das erfindungsgemäße Überzugsmittel ohne vorherige Trocknung bzw. Vernetzung, gegebenenfalls nach kurzer Ablüftphase, ein weiteres Überzugsmittel aufzubringen. Es kann sich bei dem weiteren Überzugsmittel nochmals um ein Überzugsmittel auf der Basis der vorliegenden Erfindung oder um ein anderes Überzugsmittel handeln. Danach findet eine gemeinsame Vernetzung der Überzugsschichten statt.

Das erfindungsgemäße Überzugsmittel eignet sich besonders zum Einsatz in der Mehrschichtlackierung. Dabei können je nach Pigmentierung beispielsweise Klarlacküberzugsmittel, Basislack- oder Decklacküberzugsmittel sowie Steinschlagschutz-Überzugsmittel, Füller oder Primer hergestellt werden. Bevorzugt ist die Verwendung als Klarlacküberzugsmittel, aufgetragen auf eine Basisschicht auf Basis eines wäßrigen oder lösemittelhaltigen Überzugsmittels. Besonders bevorzugt ist die Verwendung als Metallic oder Uni-Basecoat. Die Überzüge können vor dem weiteren Beschichten durch Temperaturerhöhung vernetzt werden oder sie werden bevorzugt naß-in-naß aufgetragen. Die so erhaltenen Überzüge zeichnen sich durch eine hohe Kratzfestigkeit, durch ein hohes Glanzhaltungsvermögen sowie durch eine erhöhte Beständigkeit im Kondenswasserklima aus. Sie sind besonders zur Verwendung in der Autoreparaturlackierung geeignet.

Die folgenden Beispiele erläutern die Erfindung. Teile (T) und Prozentangaben beziehen sich, sofern nicht anderes angegeben, auf das Gewicht.

**Beispiele**

Beispiel 1

Kunstharz-Bindemittel 1

A. 600 T Trimethylolpropan, 444 T Kokosfettsäure und 421 T Tetrahydrophthalsäureanhydrid werden gemischt und vorsichtig aufgeschmolzen. Unter Rühren und Stickstoffatmosphäre zusammen mit 100 T Xylol so langsam auf 170° - 230° aufgeheizen, daß gleichmäßig Reaktionswasser azeotrop abdestilliert und die Säurezahl auf unter 0,3 absinkt.

B. Es werden unter Feuchtigkeitsausschluß 841 T Trimethylhexamethylendiisocyanat mit 268 T Dimethylolpropionsäure in 600 T N-Methylpyrrolidon bei 50 bis 65°C umgesetzt bis die NCO-Zahl ca. 10 beträgt.

524,5 T Produkt A werden mit 353,6 T Produkt B gemischt und vorsichtig erwärmt, bis eine exotherme Wärmeentwicklung zu beobachten ist. Nach Beendigung des Temperaturanstiegs wird auf 135°C erwärmt und diese Temperatur 20 min. gehalten. Nach Abkühlen auf 100°C werden 31,1 T Triethylamin und 100 T vollentsalztes Wasser zugegeben. nach 15 min. werden weitere 1400 T Wasser innerhalb 10 min. zugegeben und anschließend 30 min. gut nachgerührt.

| | |
|---|---|
| Festkörper | 30,8 Gew.-% (1 Stunde 150°C/Umluft) |
| Säurezahl | 32,8 (58 mEqu/100 g) |
| MEQ-Wert | 45,7 (mEqu/100 g Festharz) |
| OH-Zahl | 105 |
| Lösemittelgehalt | 14 % |
| mEqu = Milliequivalente | |

Beispiel 2

Kunstharz-Bindemittel 2

A) Es wird ein Umsetzungsprodukt nach Beispiel 1A hergestellt.

B) In einem trockenen Reaktionsgefäß werden 212 T Dimethylolpropionsäure in 1000 T Aceton suspendiert und nach Zusatz von 704 T Isophorondiisocyanat unter Anstieg der Temperatur bis 60°C umgesetzt.

542 T Produkt A werden mit 630 T Produkt B gemischt und vorsichtig erwärmt, bis eine exotherme Wärmeentwicklung zu beobachten ist. Nach Beendigung des Temperaturanstiegs wird auf 60°C erwärmt. Nach Erreichen eines NCO-Gehaltes von 0,2 % werden 15,5 T Triethylamin und 100 T vollentsalztes Wasser eingerührt und nach 5 min. weitere 1000 T Wasser zugegeben, wobei die Temperatur auf ca. 30°C absinkt. Es wird anschließend 30 min. gut nachgerührt und dann i.V. das Aceton vollständig abdestilliert.

| | |
|---|---|
| Festkörper | 37,4 Gew.-% (1 Stunde 150°C/Umluft) |
| Säurezahl | 36,4 (64,9 mEqu/100 g) |
| MEQ-Wert | 52 (mEqu/100g Festharz) |
| OH-Zahl | 70 (berechnet) |
| Lösemittelgehalt | 0,1 % |

Beispiel 3

Kunstharz-Bindemittel 3

A) Es wird ein Umsetzungsprodukt nach Beispiel 1A hergestellt.
B) Es wird ein Umsetzungsprodukt nach Beispiel 2B hergestellt.

500 T Produkt 2A werden mit 300 T Produkt 2B gemischt und vorsichtig erwärmt, bis eine Wärmetönung zu beobachten ist. Nach Beendigung der Wärmetönung wird bei 60°C so lange nachgerührt, bis der NCO-Gehalt weniger als 0,2 % beträgt. Nun werden zunächst 14 T Dimethylethanolamin und 100 T vollentsalztes Wasser und nach 5 min. weitere 600 T vollentsalztes Wasser eingerührt,wobei die Temperatur auf ca. 30°C sinkt. Es wird anschließend unter Erwärmung auf 70°C ca. 30 min. nachgerührt und dann im Vakuum das Aceton abdestilliert.

| | |
|---|---|
| Festkörper | 43,1 Gew.-% (1 Stunde 150°C/Umluft) |
| Säurezahl | 23,0 (mg KOH/G = ca. 41 mEqu/100 g Festharz) |
| MEQ-Amin | 22,6 (mEqu Amin/100 g Festharz) |
| OH-Zahl | 130 (berechnet) |
| Lösemittelgehalt | 0,2 % |

Beispiel 4 (Härter, Komponente B)

14 T des Reaktionsproduktes aus Trimethylolpropan und Tetramethylxylylendiisocyanat (1:3) (70%ig in Methoxypropylacetat) werden mit 54,4 T Hexa(methylen)diisocyanat vermischt. Vor dem Einsatz als Komponente B werden 31,6 T Butoxyethanol zugemischt. Die Komponente hat eine Viskosität von 5 mPas.

Beispiel 5 (2K-Füller)

Zu 61,5 T einer wäßrigen Dispersion nach Beispiel 1 werden 6,2 T vollentsalztes Wasser, 12,3 T Titandioxid, 0,9 T Eisenoxid, 9,8 T Bariumsulfat und 9,3 T Kaolin gegeben. Es wird die Viskosität mit wenig Wasser eingestellt und dann auf einer Perlmühle auf die notwendige Kornfeinheit vermahlen. Der Festkörper der Füllerkomponente A, beträgt 53,8 %.

Zu 100 T der so erhaltenen Füllerkomponente A werden 8,6 T der Komponente B nach Beispiel 4 gegeben. Die Mischung weist eine Topfzeit von 4 Std. auf, der Festkörper beträgt 54,5 %. Das Füllerüberzugsmittel wird auf, vorbeschichtete Stahlsubstrate aufgespritzt und in 18 Std. bei 20°C getrocknet. Die Schichtdicke des Füllers beträgt ca. 50 µm. Auf dieses Substrat wird dann ein nach Beispiel 7 hergestellter isocyanatvernetzender Decklack aufgetragen und

vernetzt.

Beispiel 6 (2K-met.Basislack)

Zu 56,2 T einer wäßrigen Dispersion nach Beispiel 1 werden 39,2 T vollentsalztes Wasser, 1,1 T Phthalocyaninpigment, 1,7 T Aluminium-Pigmente (40%ig Paste) sowie 1,4 T Verdicker (Festkörper 50 %) gegeben. Es werden noch 0,3 T Dimethylethanolamin zugesetzt und dann unter einem Rührwerk ca. 30 min. homogenisiert.

Zu 100 T der so erhaltenen Basecoat-Komponente A werden 7,9 T der Komponente B nach Beispiel 4 gegeben und gründlich homogenisiert. Die Mischung weist eine Topfzeit von 6 Std. auf, der Festkörper ist ca. 25,5 %. Das Basislacküberzugsmittel wird auf handelsüblichen mit einer Elektrophoresegrundierung und einem konventionellen Spritz-Füller vorbeschichteten Stahlsubstraten aufgespritzt, 20 min., bei 20°C vorgetrocknet und dann mit einem handelsüblichen nicht-wäßrigen Zweikomponenten-Klarlack überschichtet. Die Schichtdicke des Basislackes beträgt ca. 25 µm. Es entsteht ein glatter, hochglänzender Metallicüberzug, der gegen Wassereinwirkung stabil bleibt.

Beispiel 7 (2K-Uni Decklack)

Zu 88,9 T einer wäßrigen Dispersion nach Beispiel 1 werden 2,7 T Ruß sowie 0,4 T eines handelsüblichen Verlaufsmittels gegeben. Danach wird die so erhaltene Mischung mit 8,0 T vollentsalztem Wasser auf ca. 33,7 % Festkörper verdünnt. Auf einer Perlmühle wird die Mischung ca. 80 min. auf die notwendige Kornfeinheit vermahlen.

100 T dieser so erhaltenen Uni-Decklack-Komponente A werden mit 13,5 T. der Komponente B nach Beispiel 4 vermischt. Das Überzugsmittel hat eine Topfzeit von 8 Std., der Festkörper ist 37,5 %. Das Decklacküberzugsmittel wird auf handelsüblichen mit Elektrophoresegrundierung und wäßrigen 2K-Füller nach Beispiel 5 vorbeschichteten Stahlsubstraten aufgespritzt und 60 min. bei 60°C getrocknet. Die Schichtdicke des Decklackes beträgt ca. 45 µm und hat bei guter Wasserbeständigkeit eine glatte, glänzende Oberfläche.

Vergleichsversuch A (2K-Uni-Decklack)

Zu 88,4 T einer wäßrigen Dispersion nach Beispiel G der EP-A 0 358 979 (26 % Festkörper) werden 1,9 T Ruß gegeben. Nach Einstellen der Viskosität mit wenig Wasser wird auf einer Perlmühle die Mischung auf die notwendige Kornfeinheit vermahlen. Danach wird das so erhaltene Mahlgut mit 9,7 T vollentsalztem Wasser auf ca. 25 % Festkörper verdünnt (Komponente A).

Als Komponente 8 wird ein Gemisch aus oligomerem Hexamethylendiisocyanat nach dem Polyisocyanatbeispiel 1 der EP-A 0 358 979 mit einer Viskosität von ca. 150 mPas eingesetzt. Zu 100 T der oben erhaltenen Komponente A werden 10,3 T der Komponente B gegeben und gründlich homogenisiert. Die Mischung weist eine Topfzeit von 30 min. auf. Das Decklacküberzugsmittel wird auf handelsübliche mit Elektrophoresegrundierung und Füller vorbeschichtete Stahlsubstrate aufgespritzt und 60 min. bei 60°C getrocknet bzw. gehärtet. Die Schichtdicke des Decklackes beträgt ca. 35 µm; der Film hat eine mattglänzende Oberfläche.

Beispiel 8 (2K-Klarlack)

Zu 84,0 T einer wäßrigen Dispersion nach Beispiel 2 werden 14,7 T vollentsalztes Wasser, 0,9 T eines handelsüblichen Lichtschutzmittels sowie 0,4 T eines Verlaufsmittels zugemischt und bei 40°C in einem schnellaufenden Rührer 20 min. vermischt.

Zu 100 T der so erhaltenen Komponente A werden 12,5 T der Komponente B nach Beispiel 4 gegeben und gründlich homogenisiert. Die Mischung weist eine Topfzeit von 8 Std. auf, der Festkörper beträgt 35 %. Das Überzugsmittel wird auf handelsüblichen mit Grundierung, Füller und Metallic-basecoat vorbeschichteten Polypropylensubstraten aufgespritzt und 60 min. bei 60°C getrocknet. Die Schichtdicke des Klarlackes beträgt ca. 40 µm.

Die beschichteten Substrate nach Beispiel 5 bis 8 weisen einen hohen Glanz auf. Nach Feuchtraumbelastung nach DIN 50 017 tritt keine Enthaftung (Blasenbildung) des erfindungsgemäßen Überzugsmittels zu den benachbarten Schichten auf.

Beispiel 9 (2K-Klarlack)

Zu 84,0 T einer wäßrigen Dispersion nach Beispiel 2 werden 14,7 T vollentsalztes Wasser, 0,9 T eines handelsüblichen Lichtschutzmittels sowie 0,4 T eines Verlaufsmittels zugemischt und bei 40°C 20 min. vermischt (Komponente A).

Als Komponente B werden 67 T Hexamethylendiisocyanat mit 33 T Butoxyethanol gemischt und auf 5 mPas verdünnt.

Zu 100 T der Komponente A werden 11,1 T der Komponente B gegeben und gründlich homogenisiert. Die Mischung weist eine Topfzeit von 30 min. auf, der Festkörper beträgt 35 %. Das Überzugsmittel wird auf handelsüblichen mit Grundierung, Füller und Metallic-Basecoat vorbeschichteten Polypropylensubstraten aufgespritzt und 60 min. bei 60°C getrocknet. Die Schichtdicke des Klarlackes beträgt ca. 40 µm.

Beispiel 10 (2K-Klarlack)

Zu 84,0 T einer wäßrigen Dispersion nach Beispiel 2 werden 14,7 T vollentsalztes Wasser, 0,9 T eines handelsüblichen Lichtschutzmittels sowie 0,4 T eines Verlaufsmittels zugemischt und bei 40°C 20 min. vermischt (Komponente A).

Als Komponente B werden 75 T Tetramethylxylylendiisocyanat mit 25 T Butoxyethanol gemischt und dadurch auf 5 mPas verdünnt.

Zu 100 T der so erhaltenen Komponente A werden 25,2 T der Komponente B gegeben und gründlich homogenisiert. Die Mischung weist eine Topfzeit von 16 Std. auf, der Festkörper beträgt 29,2 %. Das Überzugsmittel wird auf handelsübliche mit Grundierung, Füller und Metallic-Basecoat vorbeschichtete Polypropylensubstrate aufgespritzt und 60 min. bei 60°C getrocknet. Die Schichtdicke des Klarlackes beträgt ca. 40 µm.

Die Beispiele 8 und 10 zeigen im Vergleich mit Beispiel 9 eine längere Topfzeit. Die mechanischen Eigenschaften des nach Beispieil 8 erhaltenen Überzugs sind besser (verbesserte Elastizität) als die des nach Beispiel 10 erhaltenen Überzugs.

Beispiel 11

Kunstharz-Bindemittel 11

Polyestergrundharz A

1610 g Trimethylolpropan, 1354 g Kokosfettsäure, 1142 g Hexahydrophthalsäureanhydrid und 170 g Xylol werden gemischt, vorsichtig aufgeschmolzen und langsam bis auf 150°C erhitzt. Es wird langsam, bei steigenden Temperaturen bis auf 235°C unter Rühren so lange Reaktionswasser ausgekreist, bis die Säurezahl den Wert von 1 unterschritten hat. Nach Abdestillieren des Xylols im Vakuum hat das Produkt folgende Kennwerte:

| | |
|---|---|
| Festkörpergehalt | 98 % (1 h 150°C/Umluft) |
| Säurezahl | < 1 |
| OH-Zahl | ca. 220 |

Carboxylfunktionelles PUR-Vorprodukt B
(PUR = Polyurethan)

Es werden unter Feuchtigkeitsausschluß in 800 g Aceton 704 g Isophorondiisocyanat mit 212,5 g Dimethylolpropionsäure gemischt und so lange unter Rückfluß und Ausschluß von Luftfeuchtigkeit bei 60 bis 63°C gerührt, bis eine klare Lösung mit einem NCO-Gehalt von ca. 7 % entstanden ist.

| | |
|---|---|
| Festkörpergehalt | 53,4 % |
| Säurezahl | 52 |
| NCO-Gehalt | 7,8 % (bez. auf Lösung) |

Polyethermodifiziertes PUR-Vorprodukt C

Ein Reaktionsgemisch aus 500 g Polyethylenglykolmonomethylether der Molmasse 500, 800 g Aceton und 222 g Isophorondiisocyanat wird bei 60 bis 63°C so lange unter Rückfluß gerührt, bis der NCO-Gehalt der Lösung auf ca. 3,8 % abgesunken ist.

| | |
|---|---|
| Festkörpergehalt | 53,8 % |
| NCO-Gehalt | 3,8 % (bez. auf Lösung) |
| Polyethylenoxidgehalt | 914 MEQ/100 g Festharz |

Aus den Vorprodukten A, B und C wird folgende Polyurethandispersionen hergestellt:

PUR-Dispersion 1

310 g Polyestergrundharz A wird mit 108 g carboxyfunktionellem PUR-Vorprodukt B und 123 g polyethermodifiziertem PUR-Vorprodukt C gemischt und bei 60 bis 63°C so lange gerührt, bis der NCO-Gehalt unter 0,2 % liegt. Nach Zugabe von 6 g Dimethylethanolamin und 750 g vollentsalztem Wasser wird die Polyurethandispersion auf einen verarbeitungsfähigen Festkörper eingestellt mit folgenden Enddaten:

| | |
|---|---|
| Festkörpergehalt | 38 % |
| Säurezahl | 13 |
| OH-Zahl | 113 |
| Amingehalt | 15 MEQ/100 g Festharz |
| Polyethylenoxidgehalt | 138 MEQ/100 g Festharz |

PUR-Dispersion 2

Herstellungsverfahren wie Versuch 1 unter Verwendung von 90 g carboxylfunktionelles PUR-Vorprodukt B und 40 g polyethylenmodifiziertes PUR-Vorprodukt C:

| | |
|---|---|
| Festkörpergehalt | 38 % |
| Säurezahl | 12 |
| OH-Zahl | 150 |
| Amingehalt | 18 mEqu/100 g Festharz |
| Polyethylenoxidgehalt | 52 mEqu/100 g Festharz |

PUR-Dispersion 3

Herstellungsverfahren wie Versuch 1 unter Verwendung von 52 g carboxylfunktionelles PUR-Vorprodukt B und 70 g polyethylenoxidmodifiziertes PUR-Vorprodukt C sowie 2,8 g Dimethylethanolamin und 650 g vollentsalztem Wasser.

| | |
|---|---|
| Festkörpergehalt | 38 % |
| Säurezahl | 7 |
| OH-Zahl | 157 |
| Amingehalt | 8 mEqu/100 g Festharz |
| Polyethylenoxidgehalt: 92 mEqu/100 g Festharz | |

Die PUR-Dispersionen 1, 2 und 3 sind beim Lagern ohne Koagulatbildung stabil. Durch Zusatz eines Polyisocyanatgemisches nach Beispiel 5 im NCO/OH-Equivalentverhältnis von 1,2 : 1 wird ein Lack hergestellt, der gegebenenfalls mit weiterem Wasser auf eine Spritzviskosität eingestellt wird. Mit ihm werden auf Blechen, die grundiert und mit einem wäßrigen blauen Metallic-Basecoat versehen sind, in drei Spritzgängen ein Keil von 40 bis 150 µm Schichtdicke aufgespritzt, wobei jeweils 5 Minuten bei Raumtemperatur abgelüftet wird. Bei der Beurteilung des hochglänzenden, harten Films nach 24 Stunden werden maximal folgende Schichtdicken blasenfrei erhalten:

| | |
|---|---|
| PUR-Dispersion 1 | ca. 60 µm |
| PUR-Dispersion 2 | ca. 100 µm |
| PUR-Dispersion 3 | ca. 120 µm |

Beispiel 12

Aus 89 g Dimethylolpropionsäure und 284 g 3(4)-Isocyanatomethyl-1-methylcyclohexylisocyanat (IMC) wird unter Zusatz von 50 g N-Methylpyrrolidon und 300 g Methylethylketon bei ca. 80°C solange gehalten, bis alle Dimethylolpropionsäure aufgelöst ist. Danach gibt man 908 g eines Polyesters mit einer Molmasse von 800 aus Adipinsäure und Isophthalsäure im Molverhältnis 1 : 2 und Hexandiol, anschließend hintereinander 298 g IMC und 161 g Trimethylolpropan zu. Es wird solange gehalten bis der NCO-Gehalt (bezogen auf den Festkörper) 2,2 bis 2,1 % beträgt. Danach setzt man erst 20 g eines Adduktes aus IMC und Polyethylenoxid-monomethylether mit einer Molmasse von 350 und nach 30 min. weitere 53 g Trimethylolpropan zu. Es wird gehalten bis der NCO-Gehalt unter 0,5 % liegt. Das Harz hat eine Säurezahl von 22; die berechnete OH-Zahl beträgt ca. 75.

Es werden 90 % der Carboxylgruppen mit einem Wasser-Amin-Gemisch (1 : 1) mit einer Mischung aus N-Methyldiisopropanolamin und Hexandiamin-1,6 im Gew.-Verhältnis 4 : 1 neutralisiert, anschließend mit entionisiertem Wasser auf einen Festkörper von 38 Gew.-% verdünnt und das Methylethylketon abdestilliert.

| | |
|---|---|
| Festkörper | 37,4 Gew.-% (30 min. 150°C) |
| mittlere Teilchengröße | ca. 110 µm |

Durch Zusatz eines Polyisocyanatgemisches im NCO/OH-Äquivalentverhältnis 1,4 : 1 wird ein wasserverdünnbarer Klarlack hergestellt, der gegebenenfalls mit weiterem Wasser auf Spritzviskosität eingestellt wird. Auf Blechen, die grundiert und mit einem blauen Wasserbasecoat lackiert sind, werden in drei Spritzgängen bei einer Ablüftzeit von 5 min. ohne Blasenbildung über 100 µm Trockenfilmschichtdicke aufgetragen. Es entsteht ein glatt verlaufender, harter, hochglänzender Film.

**Patentansprüche**

**1.** Wasserverdünnbares Überzugsmittel, enthaltend

A) 40 bis 95 Gew.-% eines filmbildenden, OH-Gruppen enthaltenden gegebenenfalls zumindest teilweise neutralisierten Polyurethanharzes oder eines Gemisches derartiger Harze, in der Form einer wäßrigen Dispersion, wobei das Polyurethanharz oder das Gemisch hergestellt wurde durch

I) Herstellung eines NCO-Gruppen enthaltenden Preaddukts aus

a) einer oder mehreren organischen Säuren mit einer sterisch gehinderten Säurefunktion und zwei mit Isocyanat reaktionsfähigen Gruppen,
und/oder
einer oder mehreren Verbindungen mit mindestens einer in der Hauptkette liegenden oder seitenständigen, hydrophilen Kette mit Ethylenoxideinheiten und zwei mit Isocyanat reaktionsfähigen Gruppen, mit

b) einem oder mehreren aliphatischen, cycloaliphatischen arylaliphatischen oder aromatischen Diisocyanaten, gegebenenfalls zusammen mit einem oder mehreren aliphatischen, cycloaliphatischen arylaliphatischen oder aromatischen Diisocyanaten mit mindestens einer seitenständigen hydrophilen Kette mit Ethylenoxideinheiten,

II) Herstellung eines OH-Gruppen enthaltenden Prekondensats aus

c) einem oder mehreren Polyalkoholen,
d) gegebenenfalls einer oder mehreren Fettsäuren,
e) einer oder mehreren Dicarbonsäuren, und
f) gegebenenfalls einem oder mehreren Polyolen mit mindestens heiten, einer seitenständigen hydrophilen Kette mit Ethylenoxidein-
g) gegebenenfalls höherfunktionellen Polycarbonsäuren und/oder Monoalkoholen, und

III) anschließende Umsetzung der unter I) und II) erhaltenen Produkts, gegebenenfalls in Anwesenheit eines oder mehrerer Monoisocyanate mit einer hydrophilen Kette mit Ethylenoxideinheiten, in derartigen Mengenanteilen, daß die OH-Gruppen des
unter II) erhaltenen Prekondensats im Überschuß über die vorhandenen NCO-Gruppen vorliegen.

B) 60 bis 5 Gew.-% eines oder mehrerer Polyisocyanate mit mehr als einer freien Isocyanatgruppe, die bei Raumtemperatur, gegebenenfalls unter Zusatz eines oder mehrerer organischer Lösemittel, flüssig sind, wobei sich die Gewichtsprozente von A) und B) jeweils auf den Harz-Festkörpergehalt beziehen und auf 100

Gew.-% addieren, sowie

C) gegebenenralls ein oder mehrere zusätzliche Bindemittel, übliche Pigmente, Füllstoffe und/oder lacküblische Additive und Hilfsstoffe.

**2.** Überzugsmittel nach Anspruch 1, worin die Polyurethanharze der Komponente A) bis zu 50 Gew.-%, bezogen auf den Harzfestkörpergehalt, mit einer oder mehreren Fettsäuren modifiziert sind.

**3.** Überzugsmittel nach Anspruch 1 oder 2, worin das Polyurethanharz oder das Polyurethanharzgemisch der Komponente A) im Durchschnitt

eine OH-Zahl von 25 bis 250,
einen Gehalt an Urethangruppen von 2 bis 20 Gew.-%, bezogen auf den Harzfestkörper,
ein Zahlenmittel der Molmasse (Mn) von 1000 bis 100000,
und, jeweils bezogen auf 100 g Harzfestkörper einen Gehalt an Säurefunktion von weniger als 80 mEqu und/oder einen Gehalt an Ethylenoxideinheiten von weniger als 150 mEqu, wobei, falls Säurefunktion und Ethylenoxideinheiten gemeinsam vorhanden sind, die Summe der Säurefunktionen und der Ethylenoxideinheiten 1 bis 200 mEqu beträgt, aufweist, wobei die Säurefunktionen gegebenenfalls zumindest teilweise neutralisiert sind.

**4.** Überzugsmittel nach einem der Ansprüche 1 bis 3, worin bei der Herstellung der Komponente A) als organische Säure a) eine oder mehrere organische Säuren mit einer sterisch gehinderten Säurefunktion und zwei mit Isocyanatgruppen reaktionsfähigen Gruppen, ausgewählt aus Hydroxylgruppen, primären und sekundären Aminogruppen, eingesetzt werden.

**5.** Überzugsmittel nach einem der vorhergehenden Ansprüche, worin bei der Herstellung der Komponente A) als Verbindung b) mit mindestens einer seitenständigen hydrophilen Kette ein Polyurethanprepolymer verwendet wird, das mindestens eine seitenständige, Ethylenoxideinheiten enthaltende Kette und zwei endständige Hydroxylgruppen aufweist.

**6.** Überzugsmittel nach einem der vorhergehenden Ansprüche, worin die Komponente A) ein Gemisch aus einem oder mehreren Polyurethanharzen mit Säurefunktionen und einem oder mehreren Polyurethanharzen mit mindestens eine seitenständige, Ethylenoxideinheiten enthaltende Kette aufweisenden Emulgator enthält, der zwei mit Isocyanat reaktive Gruppen aufweist.

**7.** Überzugsmittel nach einem der vorhergehenden Ansprüche, worin das Polyurethanharzgemisch der Komponente A) aus einer Carboxylgruppen und Hydroxylgruppen enthaltenden Komponente A1) und einer Hydroxylgruppen enthaltenden Komponente A2) besteht.

**8.** Wasserverdünnbares Überzugsmittel nach einem der Ansprüche 1 bis 7, worin die Polyisocyanate der Komponente B) in einem oder mehreren zumindest teilweise wasserverdünnbaren organischen Lösemitteln bei einem Festkörpergehalt von über 40 Gew.-% vorliegen.

**9.** Wasserverdünnbares Überzugsmittel nach Anspruch 8, worin die wasserverdünnbaren Lösemittel Alkoxyalkohole, Ketoalkohole und/oder sterisch gehinderte Alkohole oder Glykole sind, die nicht oder nur langsam mit Isocyanaten reagieren.

**10.** Wasserverdünnbares Überzugsmittel nach einem der vorhergehenden Ansprüche, worin die Komponente B) mindestens ein sterisch gehindertes Polyisocyanat der allgemeinen Formel

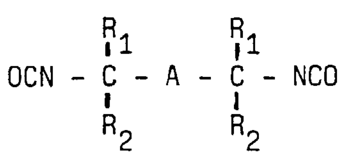

(V)

enthält, wobei

$R_1$ = H oder $R_2$,
$R_2 = C_nH_{2n+1}$ mit n = 1 bis 6,

und die Substituenten $R_1$ und $R_2$ gleich oder verschieden und linear oder verzweigt sein können, und A eine einfache Bindung, einen aromatischen oder alicyclischen Ring oder eine aliphatische lineare oder verzweigte C-Kette mit 1 bis 12 C-Atomen bedeutet.

**11.** Überzugsmittel nach einem der vorhergehenden Ansprüche, wobei in die Komponente A) ein oder mehrere Di- und/oder Polyamine mit primären und/oder sekundären Aminogruppen als Neutralisationsmittel entweder vor dem Emulgieren in das Harz oder mittels der Wasserphase eingearbeitet wird.

**12.** Verfahren zur Herstellung eines wäßrigen Überzugsmittels gemäß einem der Ansprüche 1 bis 11, dadurch gekennzeichnet, daß man unmittelbar vor der Anwendung

A) 40 - 95 Gew.-% einer wäßrigen Dispersion, wie in Anspruch 1 definiert,

B) 60 - 5 Gew.-% eines oder mehrerer Polyisocyanate mit mehr als einer freien Isocyanatgruppe, die bei Raumtemperatur flüssig sind, oder die man gegebenenfalls unter Zusatz eines oder mehrerer organischer Lösemittel flüssig macht,

vermischt, wobei sich die Gew.-% von A) und B) jeweils auf den Harz-Festkörpergehalt beziehen und auf 100 Gew.-% addieren, wobei man der Komponente A) und/oder B) vor dem Vermischen oder dem Gemisch aus A) und B) gegebenenfalls

C) ein oder mehrere zusätzliche Bindemittel, übliche Pigmente, Füllstoffe und/oder lackübliche Additive und Hilfsstoffe beimischt.

**13.** Verfahren nach Anspruch 12, dadurch gekennzeichnet, daß man das oder die Polyisocyanate in einem oder mehreren organischen, mit Wasser mischbaren Lösemitteln verflüssigt.

**14.** Verwendung der wäßrigen Überzugsmittel nach einem der Ansprüche 1 bis 11 bei der Herstellung von Mehrschichtlackierungen.

**15.** Verwendung der wäßrigen Überzugsmittel nach einem der Ansprüche 1 bis 11 bei der Lackierung von temperaturempfindlichen Substraten, bei Trocknungstemperaturen von 25 bis 80°C.

## Claims

**1.** Water-dilutable surface coating agent, containing

A) 40 to 95 wt.% of a film-forming, optionally at least partly neutralised, polyurethane resin which contains OH groups or a mixture of these types of resins, in the form of an aqueous dispersion, wherein the polyurethane resin or mixture has been prepared by

I) preparing a preadduct which contains NCO groups, from

a) one or more organic acids with a sterically hindered acid function and two groups capable of reacting with isocyanate,
and/or
one or more compounds with at least one hydrophilic chain containing ethylene oxide units, located in the main chain or in a lateral position, and two groups capable of reacting with isocyanate, and

b) one or more aliphatic, cycloaliphatic, arylaliphatic or aromatic diisocyanates, optionally together with one or more aliphatic, cycloaliphatic, arylaliphatic or aromatic diisocyanates with at least one lateral, hydrophilic chain containing ethylene oxide units,

II) Preparing a precondensate containing OH groups, from

c) one or more polyalcohols,
d) optionally one or more fatty acids,
e) one or more dicarboxylic acids, and
f) optionally one or more polyols with at least one lateral, hydrophilic chain containing ethylene oxide units,
g) optionally higher functional polycarboxylic acids and/or monoalcohols, and

III) then reacting the products obtained in I) and II), optionally in the presence of one or more monoisocyanates with a hydrophilic chain containing ethylene oxide units, in amounts such that the OH groups in the precondensate obtained in II) is present in excess as compared with the number of NCO groups present,

B) 60 to 5 wt.% of one or more polyisocyanates with more than one free isocyanate group, which are liquid at room temperature, optionally after adding one or more organic solvents, wherein the percentages by weight of A) and B) are each specified with respect to the resin solids content and add up to 100 wt.%, and

C) optionally one or more additional binders, conventional pigments, fillers and/or conventional lacquer additives and auxiliary agents.

**2.** Surface coating agent according to Claim 1, in which up to 50 wt.%, with respect to the resin solids content, of the polyurethane resins in component A) are modified with one or more fatty acid.

**3.** Surface coating agent according to Claim 1 or 2, in which the polyurethane resin or polyurethane resin mixture in component A) has, on average,

an OH value of 25 to 250,
a concentration of urethane groups of 2 to 20 wt.%, with respect to the resin solids,
a number average molecular weight (Mn) of 1000 to 100000, and,
each with respect to 100 g of resin solids, a concentration of acid functions of less than 80 meq and/or a concentration of ethylene oxide units of less than 150 meq, wherein, if acid functions and ethylene oxide units are both present, the sum of the acid functions and the ethylene oxide units is 1 to 200 meq, wherein the acid functions are optionally at least partly neutralised.

**4.** Surface coating agent according to one of Claims 1 to 3, in which, when preparing component A), one or more organic acids with a sterically hindered acid function and two groups capable of reacting with isocyanate, selected from hydroxyl groups and primary and secondary amino groups, are used as organic acid a).

**5.** Surface coating agent according to one of the preceding Claims, in which, when preparing component A), a polyurethane prepolymer which has at least one lateral chain containing ethylene oxide units and two terminal hydroxyl groups is used as compound b) with at least one lateral hydrophilic chain.

**6.** Surface coating agent according to one of the preceding Claims, in which component A) contains an emulsifier consisting of a mixture of one or more polyurethane resins with acid functions and one or more polyurethane resins with at least one lateral chain containing ethylene oxide units, which has two groups capable of reacting with isocyanate.

**7.** Surface coating agent according to one of the preceding Claims, in which the polyurethane resin mixture in component A) consists of a component A1) which contains carboxyl groups and hydroxyl groups and a component A2) which contains hydroxyl groups.

**8.** Water-dilutable surface coating agent according to one of Claims 1 to 7, in which the polyisocyanates in component B) are present in one or more at least partly water-dilutable organic solvents, at a solids content of more than 40 wt.%.

**9.** Water-dilutable surface coating agent according to Claim 8, in which the water-dilutable solvents are alkoxyalcohols, ketoalcohols and/or sterically hindered alcohols or glycols which do not react with, or react only slowly with,

isocyanates.

**10.** Water-dilutable surface coating agent according to one of the preceding Claims, in which component B) contains at least one sterically hindered polyisocyanate of the general formula

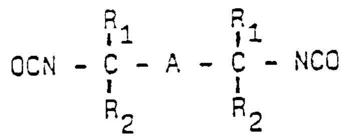

(V)

wherein

$R_1$ = H or $R_2$,
$R_2$ = $C_nH_{2n+1}$, where n = 1 to 6,

and the substituents $R_1$ and $R_2$ are identical or different and may be branched or linear, and
A represents a single bond, an aromatic or alicyclic ring or an aliphatic linear or branched carbon chain with 1 to 12 carbon atoms.

**11.** Surface coating agent according to one of the preceding Claims, wherein, in component A), one or more diamines and/or polyamines with primary and/or secondary amino groups is incorporated as neutralising agent either before emulsifying in the resin or via the aqueous phase.

**12.** Process for preparing an aqueous surface coating agent in accordance with one of Claims 1 to 11, characterised in that, immediately before use, the following are mixed:

A) 40 - 95 wt.% of an aqueous dispersion, as defined in Claim 1,

B) 60 - 5 wt.% of one or more polyisocyanates with more than one free isocyanate group which are liquid at room temperature, or optionally, which are made liquid by adding one or more organic solvents,

wherein the wt.% of A) and B) are each specified with respect to the resin solids content and add up to 100 wt.%, wherein the following are optionally admixed to component A) and/or B) prior to mixing or to the mixture of A) and B):

C) one or more additional binders, conventional pigments, fillers and/or conventional lacquer additives and auxiliary agents.

**13.** Process according to Claim 12, characterised in that the polyisocyanate(s) is liquefied in one or more organic, water-miscible, solvents.

**14.** Use of the aqueous surface coating agent according to one of Claims 1 to 11 for preparing multi-layered lacquers.

**15.** Use of the aqueous surface coating agent according to one of Claims 1 to 11 for lacquering heat-sensitive substrates, at drying temperatures of 25 to 80°C.

## Revendications

**1.** Composition de revêtement diluable dans l'eau contenant

A) 40 à 95% en poids d'une résine de polyuréthane contenant des groupes OH, filmogène, éventuellement au moins partiellement neutralisée ou d'un mélange de telles résines, sous la forme d'une dispersion aqueuse, la résine de polyuréthane ou le mélange étant obtenu

I) en préparant un pré-adduct contenant des groupes NCO

a) d'un ou plusieurs acides organiques présentant une fonction acide stériquement empêchée et deux groupes réactifs avec les isocyanates
et/ou
d'un ou plusieurs composés présentant au moins une chaîne hydrophile se trouvant dans la chaîne principale ou placée latéralement comportant des unités d'oxyde d'éthylène et deux groupes réactifs avec les isocyanates et

b) d'un ou plusieurs diisocyanates aliphatiques, cycloaliphatiques, arylaliphatiques ou aromatiques, éventuellement associés à un ou plusieurs diisocyanates aliphatiques, cycloaliphatiques, arylaliphatiques ou aromatiques présentant au moins une chaîne hydrophile latérale comportant des unités d'oxyde d'éthylène,

II) en préparant un pré-condensat contenant des groupes OH

c) d'un ou plusieurs polyalcools,
d) éventuellement d'un ou plusieurs acides gras,
e) d'un ou plusieurs acides dicarboxyliques et
f) éventuellement d'un ou plusieurs polyols présentant au moins une chaîne hydrophile latérale comportant des unités d'oxyde d'éthylène,
g) éventuellement des acides polycarboxyliques plus fortement fonctionnels et/ou des monoalcools et

III) en faisant réagir ensuite les produits obtenus sous I) et II) éventuellement en présence d'un ou plusieurs monoisocyanates présentant une chaîne hydrophile comportant des unités d'oxyde d'éthylène, en proportions telles que les groupes OH du pré-condensat obtenu sous II) se trouvent en excès par rapport aux groupes NCO présents,

B) 60 à 5 % en poids d'un ou plusieurs polyisocyanates comportant plus d'un groupe isocyanate libre, lesdits polyisocyanates étant liquides à la température ambiante, éventuellement en additionnant un ou plusieurs solvants organiques, les % en poids de A et B) se rapportant à la teneur en résine matière solide et leur somme étant égale à 100% en poids et

C) éventuellement un ou plusieurs liants supplémentaires, des pigments usuels, des matières de charge et/ou des additifs et adjuvants usuels pour les vernis.

**2.** Composition de revêtement selon la revendication 1 où les résines de polyuréthane du composant A) sont modifiées avec un ou plusieurs acides gras jusqu'à 50% en poids, rapportés à la teneur en résine matière solide.

**3.** Composition de revêtement selon la revendication 1 ou 2 où la résine de polyuréthane ou le mélange de résines de polyuréthanes du composant A) présente en moyenne un indice OH compris entre 25 et 250,

une teneur en groupes uréthanes comprise entre 2 et 20% en poids, rapportés à la résine matière solide,
une masse moléculaire moyenne en nombre (Mn) comprise entre 1 000 et 100 000,
et, rapportée à 100 g de résine matière solide, une teneur en fonctions acides inférieure à 80 méquiv. et/ou une teneur en unités d'oxyde d'éthylène inférieure à 150 méquiv., la somme des fonctions acides et des unités d'oxyde d'éthylène étant comprise entre 1 et 200 méquiv., lorsque les fonctions acides et les unités d'oxyde d'éthylène sont présentes ensemble, les fonctions acides étant éventuellement au moins partiellement neutralisées.

**4.** Composition de revêtement selon l'une des revendications 1 à 3 où l'on utilise pour la préparation du composant A) comme acide organique a) un ou plusieurs acides organiques présentant une fonction acide stériquement empêchée et deux groupes réactifs avec les groupes isocyanates, choisis parmi les groupes hydroxyles, les groupes amino primaires et secondaires.

**5.** Composition de revêtement selon l'une des revendications précédentes où l'on utilise pour la préparation du composant A) comme composé b) un prépolymère polyuréthane comportant au moins une chaîne hydrophile latérale, ledit prépolymère présentant au moins une chaîne latérale contenant des unités d'oxyde d'éthylène et deux groupes hydroxyles terminaux.

**6.** Composition de revêtement selon l'une des revendications précédentes où le composant A) contient un mélange d'une ou plusieurs résines de polyuréthane comportant des fonctions acides et d'une ou plusieurs résines de polyuréthane avec au moins un émulsifiant comportant une chaîne latérale contenant des unités d'oxyde d'éthylène et présentant deux groupes réactifs avec les isocyanates.

**7.** Composition de revêtement selon l'une des revendications précédentes où le mélange de résines de polyuréthanes du composant A) est constitué d'un composant A1) contenant des groupes carboxyliques et des groupes hydroxyles et d'un composant A2) contenant des groupes hydroxyles.

**8.** Composition de revêtement diluable dans l'eau selon l'une des revendications 1 à 7 où les polyisocyanates du composant B) se présentent dans un ou plusieurs solvants organiques au moins partiellement diluables dans l'eau avec une teneur en matière solide supérieure à 40% en poids.

**9.** Composition de revêtenent diluable dans l'eau selon la revendication 8 où les solvants diluables dans l'eau sont des alcoxyalcools, des cétoalcools et/ou des alcools ou glycols stériquement empêchés, ne réagissant pas ou que lentement avec les isocyanates.

**10.** Composition de revêtement diluable dans l'eau selon l'une des revendications précédentes où le composant B) contient au moins un polyisocyanate stériquement empêché de formule générale

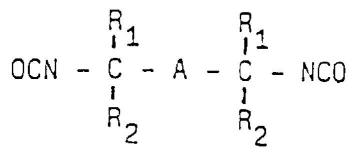

(V)

où

$R_1$ = H ou $R_2$,
$R_2 = C_nH_{2n+1}$ avec n = 1 à 6

et les substituants $R_1$ et R2 pouvant être identiques ou différents, linéaires ou ramifiés et
A représente une liaison simple, un noyau aromatique ou alicyclique ou une chaîne carbonée aliphatique linéaire ou ramifiée comportant 1 à 12 atomes de C.

**11.** Composition de revêtement selon l'une des revendications précédentes dans laquelle une ou plusieurs di- et/ou polyamines comportant des groupes amino primaires et/ou secondaires sont incorporées, comme agent de neutralisation, dans le composant A), soit avant l'émulsification dans la résine, soit au moyen de la phase aqueuse.

**12.** Procédé pour la préparation d'une composition aqueuse de revêtement selon l'une des revendications 1 à 11, caractérisé en ce que l'on mélange immédiatement avant l'utilisation

A) 40 à 95% en poids d'une dispersion aqueuse telle que définie dans la revendication 1,

B) 60 à 5% en poids d'un ou plusieurs polyisocyanates comportant plus d'un groupe isocyanate libre, liquides à la température ambiante ou rendus liquides éventuellement en additionnant un ou plusieurs solvants organiques,

les % en poids de A) et B) se rapportant à la teneur en résine matière solide et leur somme étant égale à 100% en poids, en additionnant éventuellement au composant A) et/ou B) avant le mélange ou au mélange de A) et de B)

C) un ou plusieurs liants supplémentaires, des pigments usuels, des matières de charge et/ou des additifs et adjuvants usuels pour les vernis.

**13.** Procédé selon la revendication 12, caractérisé en ce que l'on liquéfie le ou les polyisocyanates dans un ou plusieurs

solvants organiques miscibles à l'eau.

**14.** Utilisation des compositions aqueuses de revêtement selon l'une des revendications 1 à 11 pour la réalisation de revêtements multicouches.

**15.** Utilisation des compositions aqueuses de revêtement selon l'une des revendications 1 à 11 pour le revêtement de substrats sensibles à la chaleur à des températures de séchage comprises entre 25 et 80°C.